(19) Europäisches Patentamt
European Patent Office
Office européen des brevets

(11) EP 1 798 593 A1

(12) EUROPEAN PATENT APPLICATION
published in accordance with Art. 158(3) EPC

(43) Date of publication:
**20.06.2007 Bulletin 2007/25**

(21) Application number: **05785710.4**

(22) Date of filing: **20.09.2005**

(51) Int Cl.:
***G02F 1/13363*** *(2006.01)* ***G02F 1/1343*** *(2006.01)*
***G02B 5/30*** *(2006.01)*

(86) International application number:
**PCT/JP2005/017288**

(87) International publication number:
**WO 2006/035635 (06.04.2006 Gazette 2006/14)**

(84) Designated Contracting States:
**DE FR GB**

(30) Priority: **27.09.2004 JP 2004280122**

(71) Applicant: **ZEON CORPORATION**
**Tokyo 100-8246 (JP)**

(72) Inventor: **OKUDE, Shuhei, c/o ZEON CORPORATION**
**Chiyoda-ku, Tokyo 1008246 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **LIQUID CRYSTAL DISPLAY**

(57) An in-plane switching mode liquid crystal display having at least two optically anisotropic substance sheets and a liquid crystal cell between a pair of polarizers consisting of a light incident side polarizer and a light emission side polarizer, which have light transmission axes substantially perpendicular to each other. The liquid crystal display satisfies the formula:
$(\Sigma n_{xi} + \Sigma n_{yi})/2 \leqq \Sigma n_{zi}$ wherein $\Sigma$ is the total of i = 1 to k where k is the number of the anisotropic sheets, $n_{xi}$ and $n_{yi}$ are in-plane principal refractive indexes of an i-th anisotropic, provided that $n_{xi} > n_{yi}$, and $n_{zi}$ is a principal refractive index in thickness direction; and a multilayered optical body (A) consisting of the k anisotropic sheets and the liquid crystal cell satisfies the formula: $0.90 < R_{40}/R_0 < 1.10$ wherein $R_0$ is a retardation when light with wavelength of 550 nm impinges vertically, and $R_{40}$ is a retardation when light having a wavelength of 550 nm impinges at an inclination angle of 40° from the normal to the direction of the principal axis.

Fig. 1

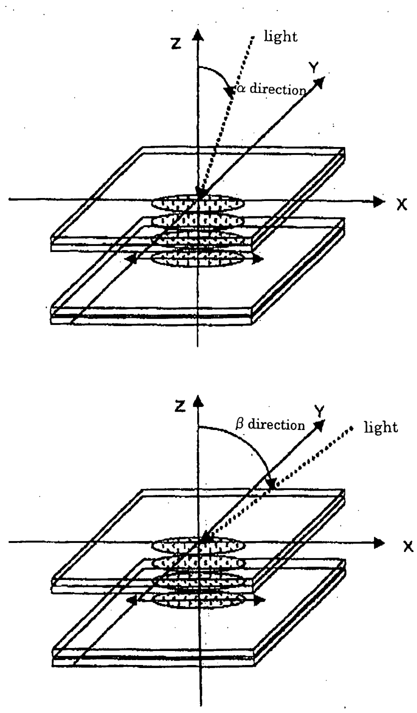


EP 1 798 593 A1

## Description

### Technical Field

This invention relates to a liquid crystal display. More particularly it relates to a liquid crystal display exhibiting improved reflection prevention and abrasive resistance, and having minimized problems in the view angle characteristics, and thus, characterized in that when an image on the display is viewed from an oblique view angle, the reduction of contrast can be minimized without substantial deterioration of image characteristics as viewed perpendicularly, and good qualified images are manifested at black display for broad view angles, and homogeneous images with a high contrast are obtained.

### Background Art

A liquid crystal display is characterized by high image quality, thin thickness, light weight and low electric power consumption, and is widely used for, for example, televisions, personal computers and car navigation equipments. A liquid crystal display has a pair of polarizers, the axes of polarity of which are perpendicular to each other, and between which a liquid crystal cell is sandwiched. By imposing a voltage to the liquid crystal cell, the orientation of liquid crystal molecules is varied whereby a picture appears. A twisted nematic display usually has a configuration such that, when a voltage is applied, liquid crystal molecules are aligned in the perpendicular direction to give a black display. An in-plane switching mode liquid crystal display usually has a configuration such that, when a voltage is not applied, the liquid crystal molecules are aligned in a certain direction and, when a voltage is applied, the alignment of liquid crystal molecules rotates by 45 degrees to give a white display.

In a liquid crystal display, the axes of polarity of which are aligned in the perpendicular direction and a horizontal direction perpendicular to the perpendicular direction, in the case when the picture is viewed from the perpendicular direction or the horizontal direction, a high contrast is obtained. In contrast, when the picture is viewed from an oblique direction other than the perpendicular and horizontal directions, birefringence occurs in the transmissive light and leakage of light occurs, and therefore, a qualified black display is difficult to obtain, and the contrast of picture is deteriorated. Therefore, an attempt is made by providing the liquid crystal device with an optical compensation means to minimize the deterioration of the contrast of picture.

For example, an in-plane switching mode liquid crystal display has been proposed in Japanese Unexamined Patent Publication No. H11-305127, pages 2-3 (US Patent No. 6,285,430), which comprises a first polarizer plate, an optical compensation film, a first substrate, a liquid crystal layer, a second substrate and a second polarizer plate, disposed in this order, wherein one of the first and second polarizer plates has a transmission axis which is parallel to a liquid crystal retardation axis of the liquid crystal layer at a black display, and the other has a transmission axis which is perpendicular to the liquid crystal retardation axis of the liquid crystal layer at a black display; and wherein the angle formed by a film retardation axis of the optical compensation film and the transmission axis of one of the two polarizing plates is 0 to 2 degrees or 88 to 90 degrees.

Another liquid crystal display has been proposed in Japanese Unexamined Patent Publication No. H10-54982, pages 2-3 (US Patent No. 6,184,957), which comprises a liquid crystal cell and polarizing sheets wherein the direction of molecular major axis of the liquid crystal varies in a plane parallel to substrates under variation of voltage applied to the liquid crystal cell, and wherein an optical compensation sheet is provided between the liquid crystal cell and at least one of the polarizing sheets, and the optical compensation sheet has an optically negative uniaxial property and its optical axis is parallel to the surface of the sheet.

These proposed liquid crystal displays still do not give sufficiently enhanced homogeneous images with a high contrast in certain viewing angles. Thus a further improvement is eagerly desired.

### Disclosure of the Invention

### Problems to Be Solved by the Invention

An object of the present invention is to provide a liquid crystal display exhibiting improved reflection prevention and abrasive resistance, and having minimized problems in the view angle characteristics, and thus, characterized in that when an image on the display is viewed from an oblique direction, the deterioration in contrast can be prevented or minimized without substantial deterioration of image characteristics as viewed perpendicularly, and well qualified images are manifested at black display for wide view angles, and homogeneous images with a high contrast are obtained.

Means for Solving the Problems

To solve the foregoing problems, the present inventors made extensive searches and found that, in the case when an in-plane switching mode liquid crystal display having at least two optically anisotropic sheets and a liquid crystal cell between a pair of polarizers consisting of a light incident side polarizer and a light emission side polarizer satisfy a requirement such that the sum of the two in-plane principal refractive indexes of the optically anisotropic sheets is not larger than the double of the principal refractive index in the thickness direction, good qualified images are manifested at black display for wide view angles, and images with enhanced homogeneity and high contrast are obtained. The present invention has been completed based on this finding.

Thus, in accordance with the present invention, there are provided liquid crystal displays as recited below.

(1) An in-plane switching mode liquid crystal display having at least two optically anisotropic substance sheets and a liquid crystal cell between a pair of polarizers consisting of a light incident side polarizer and a light emission side polarizer, which have light transmission axes substantially perpendicular to each other, characterized in that the liquid crystal display satisfies the following formula:

$$(\Sigma n_{xi} + \Sigma n_{yi}) / 2 \leqq \Sigma n_{zi}$$

wherein Σ is the total sum of i = 1 to k where k is the total number of optically anisotropic substance sheets, $n_{xi}$ and $n_{yi}$ are in-plane principal refractive indexes of an i-th optically anisotropic substance sheet, provided that $n_{xi} > n_{yi}$, and $n_{zi}$ is a principal refractive index in the thickness direction; and a multilayered optical body (A) consisting of the k optically anisotropic substance sheets and the liquid crystal cell satisfies the following formula:

$$0.90 < R_{40} / R_0 < 1.10$$

wherein $R_0$ is a retardation when light having a wavelength of 550 nm impinges perpendicularly, and $R_{40}$ is a retardation when light having a wavelength of 550 nm impinges at an inclination angle of 40 degrees from the normal to the direction of the principal axis.

(2) The liquid crystal display as described above in (1), wherein the light transmission axis of the light emission side polarizer and the slow axis of the multilayered optical body (A) are substantially parallel or substantially perpendicular to each other.

(3) The liquid crystal display as described above in (1), wherein the light transmission axis of the light incident side polarizer and the slow axis of the multilayered optical body (A) are substantially parallel or substantially perpendicular to each other.

(4) The liquid crystal display as described above in (1), wherein the slow axis of the optically anisotropic substance sheets and the slow axis of liquid crystal molecules within the liquid crystal cell in a voltage non-imposed state are substantially parallel or substantially perpendicular to each other.

(5) The liquid crystal display as described above in (1), wherein at least one of the optically anisotropic substance sheets is a layer composed of a material with a minus intrinsic birefringence value.

(6) The liquid crystal display as described above in (1), wherein at least one of the optically anisotropic substance sheets is a layer comprising discotic liquid crystal molecules or lyotropic liquid crystal molecules.

(7) The liquid crystal display as described above in (1), wherein at least one of the optically anisotropic substance sheets is a layer comprising a photo-isomerizing substance.

(8) The liquid crystal display as described above in (1), which has a protective film adhered on the light emission side polarizer, which film has a hard coat layer and a low refractive index layer, formed in this order on the light emission side of the protective film.

(9) The liquid crystal display as described above in (8), wherein the low refractive index layer is comprised of aerogel and has a refractive index of not larger than 1.37.

(10) The liquid crystal display as described above in (9), wherein the aerogel is a porous body comprising hollow articles dispersed in a matrix.

Effect of the Invention

The liquid crystal display according to the present invention has enhanced abrasive resistance and a wide view

angle, and characterized in that good qualified images are manifested at black display for wide view angles, and homogeneous images with a high contrast are obtained.

Brief Explanation of the Drawings

Fig. 1 is an explanatory view for measurement of retardation $R_{40}$.
Fig. 2 is an explanatory view illustrating an embodiment of multilayer structure of a liquid crystal display according to the present invention.
Fig. 3 is a graph showing contrast curves of the liquid crystal display illustrated in Fig. 2.
Fig. 4 is an explanatory view illustrating another embodiment of multilayer structure of a liquid crystal display according to the present invention.
Fig. 5 is a graph showing contrast curves of the liquid crystal display illustrated in Fig. 4.
Fig. 6 is an explanatory view illustrating still another embodiment of multilayer structure of a liquid crystal display according to the present invention.
Fig. 7 is a graph showing contrast curves of the liquid crystal display illustrated in Fig. 6.
Fig. 8 is an explanatory view illustrating a further embodiment of multilayer structure of a liquid crystal display according to the present invention.
Fig. 9 is a graph showing contrast curves of the liquid crystal display illustrated in Fig. 8.
Fig. 10 is an explanatory view illustrating an embodiment of multilayer structure of a conventional liquid crystal display of prior art.
Fig. 11 is a graph showing contrast curves of the liquid crystal display illustrated in Fig. 10.
Fig. 12 is an explanatory view illustrating another embodiment of multilayer structure of a conventional liquid crystal display of prior art.
Fig. 13 is a graph showing contrast curves of the liquid crystal display illustrated in Fig. 12.
Fig. 14 is a diagrammatical sectional view illustrating a coating process.

Explanation of Reference Numerals

1 Incident side polarizer
2 Liquid crystal cell
3 Optically anisotropic sheet
4 Optically anisotropic sheet
5 Light emission side polarizer
11 Micro-gravure coater
12 Drying zone
13 Light irradiation apparatus
14 Unwinding roll
15 Take-up roll
16 Guide roll
17 Guide roll
18 Guide roll
19 Guide roll

Best Mode for Carrying Out the Invention

The in-plane switching mode liquid crystal display according to the present invention has k (k is an integer of at least two) sheets of optically anisotropic bodies and a liquid crystal cell between a pair of polarizers consisting of a light incident side polarizer and a light emission side polarizer, which have light transmission axes substantially perpendicular to each other, characterized in that the liquid crystal display satisfies the following formula:

$$(\Sigma n_{xi} + \Sigma n_{yi}) / 2 \leqq \Sigma n_{zi}$$

wherein Σ is the total sum of i = 1 to k where k is the total number of optically anisotropic sheets, $n_{xi}$ and $n_{yi}$ are in-plane principal refractive indexes of an i-th optically anisotropic element, provided that $n_{xi}>n_{yi}$, and $n_{zi}$ is a principal refractive index in the thickness direction; and a multilayered optical body (A) consisting of the k optically anisotropic sheets and the liquid crystal cell satisfies the following formula:

$$0.90 < R_{40}/R_0 < 1.10$$

wherein $R_0$ is a retardation when light having a wavelength of 550 nm impinges perpendicularly, and $R_{40}$ is a retardation when light having a wavelength of 550 nm impinges at an inclination angle of 40 degrees from the normal to the direction of the principal axis.

In the liquid crystal display according to the present invention, the light transmission axis of the light incident side polarizer and the light transmission axis of the light emission side polarizer are substantially perpendicular to each other, more specifically cross preferably at an intersecting angle of 87 to 90 degrees, more preferably 89 to 90 degrees, as expressed by the angles ranging 0 to 90 degrees. The term "intersecting angle" as used herein refers to an angle defined by the two planes, each of which has each light transmission axis as normal line. When the two light transmission axes cross at an intersecting angle of smaller than 87 degrees, light tends to leak and the quality of image on the display surface at a black display is deteriorated.

The optically anisotropic sheets are comprised of different substances so that at least one of the principal refractive indexes $n_x$, $n_y$ and $n_z$ is different from the others. Thus when light emitted from a monochromatic light source proceeds, it is divided into two polarized lights having different speeds, which have vibration directions perpendicular to each other.

The arrangement of k sheets of optically anisotropic bodies and a liquid crystal cell between a pair of polarizers is not particularly limited, and thus, k optically anisotropic sheets and a liquid crystal cell can be arranged at a voluntarily position. For example, in the case when a multilayered body is formed from two optically anisotropic sheets and one liquid crystal cell, the multilayered body may take any arrangement of (1) optically anisotropic sheet-liquid crystal cell-anisotropic sheet, (2) anisotropic sheet-anisotropic sheet-liquid crystal cell, and (3) liquid crystal cell-anisotropic sheet-anisotropic sheet, as the order disposed from the light incident side to the light emission side.

If the liquid crystal display satisfy the following inequality:

$$(\Sigma n_{xi} + \Sigma n_{yi})/2 > \Sigma n_{zi}$$

when the display surface is viewed obliquely, the image quality at black display tends to be deteriorated and the contrast is liable to be reduced. By the term "contrast" as used herein, we mean a contrast ratio (CF) expressed by a ratio of $Y_{on}/Y_{off}$ where $Y_{off}$ is a luminance at dark display of the liquid crystal display, and $Y_{on}$ is a luminance at light display of the liquid crystal display. The larger the contrast ratio, the better the visibility. The light display refers to the lightest state of display surface of the liquid crystal display, and the black display refers to the darkest state of display surface of the liquid crystal display. The term "polar angle" as used in this description we mean a viewing angle at which the display surface is viewed at an angle inclined from the perpendicular line to the display surface.

In the liquid crystal display according to the present invention, a multilayered optical body (A) consisting of the k optically anisotropic sheets and the liquid crystal cell satisfies the following formula:

$$0.90 < R_{40}/R_0 < 1.10$$

wherein $R_0$ is a retardation when light having a wavelength of 550 nm impinges vertically, and $R_{40}$ is a retardation when light having a wavelength of 550 nm impinges at an inclination angle of 40 degrees from the normal to the direction of the principal axis. The multilayered optical body (A) preferably satisfies the following formula:

$$0.92 < R_{40}/R_0 < 1.08,$$

and more preferably satisfies the following formula:

$$0.95 < R_{40}/R_0 < 1.05.$$

The retardation $R_{40}$ as a retardation when light having a wavelength of 550 nm impinges at an inclination angle of 40 degrees from the normal to the direction of the principal axis is preferably measured on two directions, i.e., a direction of polar angle $\alpha$ wherein light is on Y-Z plane as the slow axis of a multilayered optical body (A) illustrated in Fig. 1 being a rotation axis, and a direction of polar angle $\beta$ wherein light is on X-Z plane as the fast of the multilayered optical body (A) being a rotation axis.

If the ratio of $R_{40}/R_0$ is smaller than 0.90 or larger than 1.10, and the difference between $R_0$ (i.e., a retardation when light having a wavelength of 550 nm impinges perpendicularly) and $R_{40}$ (i.e., a retardation when light having a wavelength of 550 nm impinges at an inclination angle of 40 degrees from the normal to the direction of the principal axis), when the display surface is viewed from the oblique direction, qualified images cannot be manifested at black display, and the contrast tends to be reduced.

In the liquid crystal display according to the present invention, it is preferable that the light transmission axis of the light emission side polarizer and/or the light transmission axis of the light incident side polarizer, and the slow axis of the multilayered optical body (A) are substantially parallel or substantially perpendicular to each other. By the term "substantially parallel" as used herein we mean that each light transmission axis and the slow axis cross at an intersecting angle of 0 to 3 degrees, preferably 0 to 1 degree, as expressed by the angles ranging 0 to 90 degrees. By the term "substantially perpendicular" as used herein we mean that each light transmission axis and the slow axis cross at an intersecting angle of 87 to 90 degrees, preferably 89 to 90 degree, as expressed by the angles ranging 0 to 90 degrees. If the light transmission axis of the light emission side polarizer and/or the light transmission axis of the light incident side polarizer, and the slow axis of the multilayered optical body (A) cross at an intersecting angle of larger than 3 degrees and smaller than 87 degrees, light leaks and qualified images become difficult to obtain at black display.

In the liquid crystal display according to the present invention, it is preferable that the slow axis of the optically anisotropic sheets and the slow axis of liquid crystal molecules within the liquid crystal cell in a voltage non-imposed state are substantially parallel or substantially perpendicular to each other. By the term "substantially parallel" as used herein we mean that the two slow axes cross at an intersecting angle of 0 to 3 degrees, preferably 0 to 1 degree, as expressed by the angles ranging 0 to 90 degrees. By the term "substantially perpendicular" as used herein we mean that the two slow axes cross at an intersecting angle of 87 to 90 degrees, preferably 89 to 90 degree, as expressed by the angles ranging 0 to 90 degrees. If the slow axis of the optically anisotropic sheets and the slow axis of liquid crystal molecules within the liquid crystal cell cross at an intersecting angle of larger than 3 degrees and smaller than 87 degrees, light leaks and qualified images become difficult to obtain at black display. The liquid crystal display of the present invention becomes a black display in a voltage non-imposed state.

In the liquid crystal display according to claim 1, it is preferable that at least one of the optically anisotropic sheets is a layer composed of a material with a minus intrinsic birefringence value, or a layer comprising discotic liquid crystal molecules or lyotropic liquid crystal molecules, or a layer comprising a photo-isomerizing substance.

The material with a minus intrinsic birefringence value refers to a material having a characteristic such that, when light is incident on a layer wherein molecules are oriented in a uniaxial order, the refractive index of light in the direction parallel to the molecule orientation is smaller than the refractive index of light in the direction perpendicular to the molecule direction.

The material having a minus intrinsic birefringence value includes, for example, aromatic vinyl polymers, acrylonitrile polymers, methyl methacrylate polymers, cellulose esters, and copolymers of these polymeric materials. Of these, aromatic vinyl polymers, acrylonitrile polymers and methyl methacrylate polymers are preferable. Aromatic vinyl polymers are especially preferable because a high birefringence is manifested.

As specific examples of the aromatic vinyl polymers, there can be mentioned polystyrene; and copolymers of an aromatic vinyl monomer such as $\alpha$-methylstyrene, p-methylstyrene, p-chlorostyrene, p-nitrostyrene, p-aminostyrene, p-vinylbenzoic acid or p-phenylstyrene with other monomers such as ethylene, propylene, butadiene, isoprene, acrylonitrile, methacrylonitrile, $\alpha$-chloroacylonitrile, methyl acrylate, ethyl acrylate, methyl methacrylate, ethyl methacrylate, acrylic acid, methacrylic acid, maleic anhydride or vinyl acetate. Of these, polystyrene and a styrene-maleic anhydride copolymer are preferably used.

The method of forming a layer containing the material having a minus intrinsic birefringence value is not particularly limited, but, a method of stretching a film comprised of a polymeric material having a minus intrinsic birefringence value is preferably adopted. By stretching the polymer film, the refractive index in the thickness direction of the optically anisotropic sheets can be controlled with an enhanced efficiency. The stretched film containing the polymeric material having a minus intrinsic birefringence value can be laminated onto another film. Or, a polymer film containing the polymeric material having a minus intrinsic birefringence value can be laminated onto another polymeric material film via an adhesive resin layer to form a multilayered structure, and the multilayered structure is stretched to thereby form the layer

containing the material having a minus intrinsic birefringence value. By stretching the multilayered structure, the layer containing the material having a minus intrinsic birefringence value can be obtained from a polymeric material film with a minus intrinsic birefringence value, the strength of which is too poor to stretch the film alone. Thus, optically anisotropic sheets satisfying the following formula:

$$(\Sigma n_{xi} + \Sigma n_{yi})/2 \leqq \Sigma n_{zi}$$

can be obtained stably without breakage of film at a temperature under which a birefringence is easily manifested.

The method of stretching the polymer film having a minus intrinsic birefringence value or the above-mentioned multilayered structure is not particularly limited. For example, there can be mentioned a uniaxial stretching method wherein the stretching is carried out in the lengthwise direction utilizing the difference in peripheral speed between rollers or stretched in the transverse direction using a tenter; a concurrent biaxial stretching method wherein the stretching is carried out in the lengthwise direction by enlarging the distance between the adjacent grips tightly holding the film or the multilayered structure, concurrently with in the transverse direction by utilizing the angle between two guide rails, or a sequential biaxial stretching method wherein the stretching is carried out in the lengthwise direction utilizing the difference in peripheral speed between rollers, and then in the transverse direction using a tenter while the distance between grips on both sides tightly holding the film or the multilayered structure is enlarged; and an oblique stretching method wherein a tenter stretching apparatus which is capable of giving a feeding force, a stretching force or a drawing force at different speeds in the transverse direction or the lengthwise direction is used, or a tenter stretching apparatus which is capable of giving a feeding force, a stretching force or a drawing force at the same speed in the transverse direction or the lengthwise direction, and has a stretching zone of the same length and with a fixed stretching angle, or a stretching zone of different lengths, is used. Of these, uniaxial stretching method is preferably adopted.

The discotic liquid crystal molecules are described in many literatures, and include, for example, benzene derivatives described in C. Desrade et al, Mol. Crysr. Liq. Cryst., vol. 71, page 111(1981), cyclohexane derivatives described in B. Kohne et al, Angew. Chem., vol. 96, page 70 (1984), and azacrown and phenylacetylene macrocycles, described in J. M. Lehn et al, J. Chem. Commun., page 1794 (1985) and J. Zhang et al, J. Am. Chem. Soc. vol. 116, page 2655 (1994). Generally the discotic liquid crystal molecules have a structure such that the above-recited compounds form a nucleus, and straight chains such as straight chain alkyl groups, straight chain alkoxy groups or substituted benzoyloxy groups are radially bonded to the nucleus.

As specific examples of the discotic liquid crystal molecules, there can be mentioned those which are represented by the following formulae [1] and [2]:

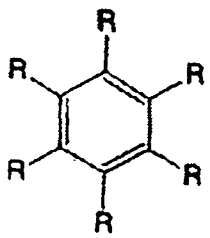

R is :

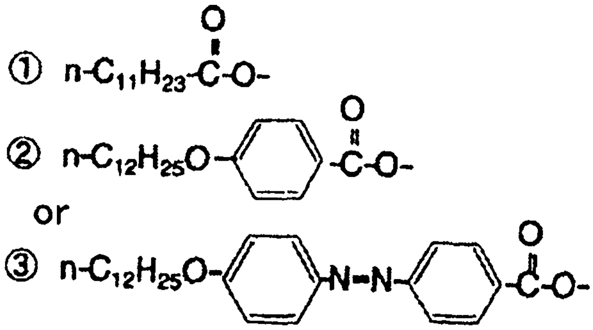

or

··· [1]

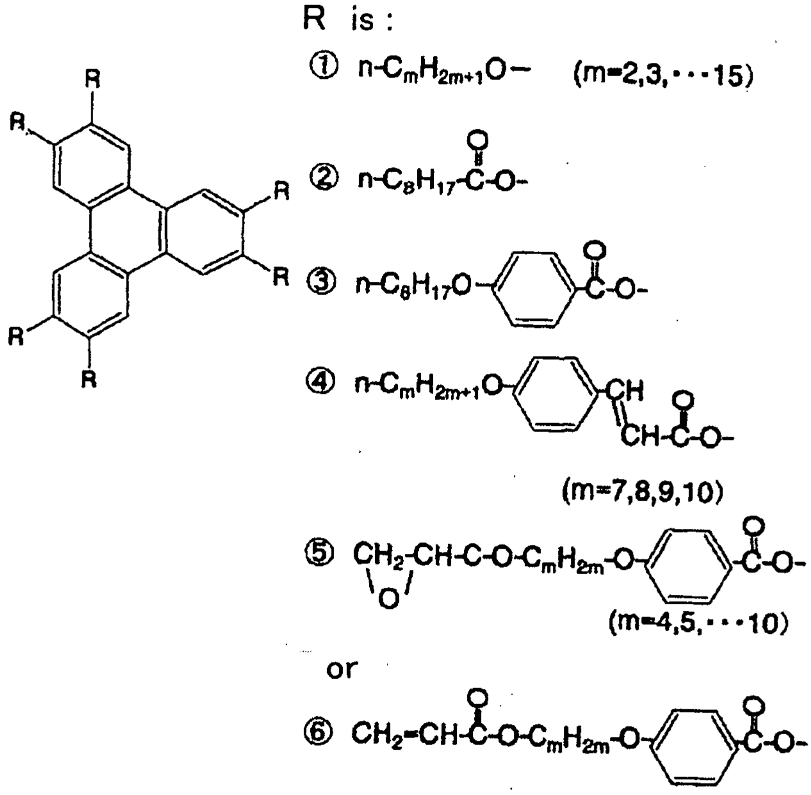

R is :

(m=2,3,···15)

(m=7,8,9,10)

(m=4,5,···10)

or

(m=4,5,···10)

··· [2]

The method of forming a layer containing the discotic liquid crystal molecules is not particularly limited, but, a method of laminating a substrate with the discotic liquid crystal molecules is preferable. Most preferably a substrate is laminated with the discotic liquid crystal molecules in a manner such that the discotic liquid crystal molecules are orientated substantially perpendicularly to the surface of substrate whereby the optically anisotropic sheets satisfying the formula:

$$(\Sigma n_{xi} + \Sigma n_{yi})/2 \leqq \Sigma n_{zi}$$

can be obtained with enhanced efficiency.

The substrate used for laminating the discotic liquid crystal molecules thereon includes, for example, glass sheet, and film and sheet made of a synthetic resin. By laminating the discotic liquid crystal molecules on the surfaces of the polarizer and the optically anisotropic sheets, used in the present invention, the liquid crystal display can be rendered light-weight and thin, and the production efficiency can be enhanced. The passage "orientated substantially perpendicularly" as mentioned above refers to the plane of the liquid crystal molecules are orientated at an angle of 60 to 90 degrees to the substrate surface.

The method of orientating the discotic liquid crystal molecules substantially perpendicularly includes, for example, a method of coating a perpendicularly orientating film formed on a substrate, with a coating liquid containing the discotic liquid crystal molecules and optional additives such as polymerization initiator, and then thus-formed coating is fixed; and a method of coating a perpendicularly orientating film with a coating liquid containing the discotic liquid crystal molecules and optional additives, thus-formed coating is fixed, and then, the fixed coating is released from the perpendicularly orientating film, and then laminated on a substrate.

The coating liquid can be prepared using water or an organic solvent. As specific examples of the organic solvent, there can be mentioned amides such as N,N-dimethylformamide, sulfoxides such as dimethylsulfoxide; heterocyclic compounds such as pyridine, hydrocarbons such as benzene and hexane, halogenated compounds such as chloroform and methylene chloride, esters such as methyl acetate and butyl acetate, ketones such as acetone and methyl ethyl ketone, and ethers such as tetrahydrofuran and 1,2-dimethoxyethane. No limitation is imposed to a coating method of the coating liquid, and the coating method includes, for example, an extrusion coating method, a direct gravure coating method, a reverse gravure coating method and a die coating method.

The perpendicularly orientated discotic liquid crystal molecules are preferably fixed as they are in the perpendicularly orientated state. The fixing method includes, for example, a thermal polymerization procedure using a thermal polymerization initiator and a photo- polymerization procedure using a photo-polymerization initiator. Of these, the photo-polymerization procedure is preferable. As specific examples of the photo-polymerization initiator, there can be mentioned α-carbonyl compounds, acyloin ethers, α-hydrocarbon-substituted aromatic acyloin compounds, polynuclear quinone compounds, a combination of a triallylimidazole dimmer with p-aminophenylketone, acrydine compounds, phenazine compopunds and oxadiazole compounds.

The perpendicularly orientating film as used herein refers to a film having a low surface energy capable of perpendicularly orientating the liquid crystal molecules, and usually the film is made of a polymer. The polymer constituting the perpendicularly orientating film preferably includes a polymer having, as side chains, fluorine atoms or hydrocarbon groups having at least 10 carbon atoms. The hydrocarbon groups may be either an aliphatic group or an aromatic group. The backbone chain of the polymer preferably has a polyimide structure or a polyvinyl alcohol structure. The polymer preferably has a polymerization degree in the range of 200 to 5,000, more preferably 300 to 3,000. The molecular weight of the polymer is preferably in the range of 9,000 to 200,000, more preferably 13,000 to 130,000.

For the preparation of the perpendicularly orientating film used in the present invention, the surface of a film made of a polymer is preferably rubbed several times in a certain direction with paper or cloth. After the liquid crystal molecules are perpendicularly orientated by using the perpendicularly orientating film, the orientated liquid crystal molecules are fixed as they are in the orientated state, to form a layer of optically anisotropic body. Only the layer of optically anisotropic body can be transferred onto a transparent polymer film. The perpendicularly orientated and fixed liquid crystal molecules can be maintained in the perpendicularly orientated state even without the perpendicularly orientating film. By the orientation of the liquid crystal molecules, the maximum in-plane refractive index of the layer containing the liquid crystal molecules is manifested in a direction substantially parallel to a disk surface of the liquid crystal molecules.

The lyotropic liquid crystal molecules are molecules exhibiting liquid crystal characteristics when they are dissolved in a specific solvent at a specific concentration. As specific examples of the lyotropic liquid crystal molecules, there can be mentioned polymeric lyotropic liquid crystal molecules prepared by dissolving a polymer having a rod-like backbone chain such as cellulose derivatives, poloypeptide and nucleic acid, amphiphatic lyotropic liquid crystal molecules which are aqueous concentrated solution of an amphiphatic low-molecular-weight compound, and chromonic liquid crystal molecules which are a solution of a low-molecular- weight compound having an aromatic ring having hydrophilic property imparted thereto.

The lyotropic liquid crystal molecules used in the present invention are preferably orientated in a specific direction by applying a shearing force. Especially preferably the surface of liquid crystal molecules is orientated substantially perpendicularly to the surface of substrate. The passage "orientated substantially perpendicularly to the surface of substrate" as used herein we mean that the surface of liquid crystal molecules is orientated at an angle of 60 to 90 degrees to the surface of substrate. By the orientation of the surface of liquid crystal molecules substantially perpendicularly to the surface of substrate, the refractive index of the optically anisotropic body in the thickness direction is controlled to give optically anisotropic sheets satisfying the following formula:

$$(\Sigma n_{xi} + \Sigma n_{yi})/2 \leqq \Sigma n_{zi}.$$

The substrate used for laminating the lyotropic liquid crystal molecules thereon includes, for example, glass sheet, and film and sheet made of a synthetic resin. By laminating the discotic liquid crystal molecules on the surfaces of the polarizer and the optically anisotropic sheets, used in the present invention, the liquid crystal display can be rendered light-weight and thin, and the production efficiency can be enhanced.

The lyotropic liquid crystal molecules preferably do not exhibit substantial absorbance in the visible light region. Such lyotropic liquid crystal molecules include, for example, compounds represented by the following formulae [3] and [4]:

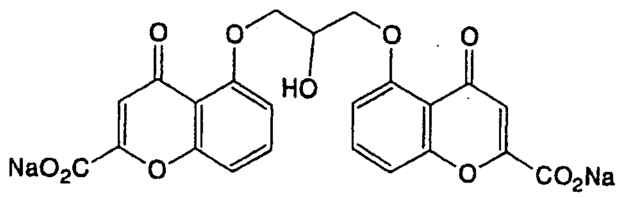

··· [3]

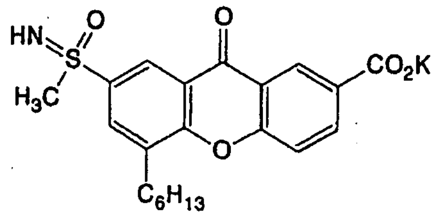

··· [4]

The method of forming a layer containing the lyotropic liquid crystal molecules is not particularly limited, but, a method of orientating the lyotropic liquid crystal molecules vertially to the surface of substrate by applying a shearing force. By orientating the lyotropic liquid crystal moleculaes perpendicularly to the surface of substrate, the refractive index in the thickness direction of the optically anisotropic sheets can be controlled with an enhanced efficiency.

The method of orientating the lyotropic liquid crystal molecules perpendicularly includes, for example, a method of coating a substrate with a coating solution containing the lyotropic liquid crystal molecules and optional additives, and then thus-formed coating is fixed. In this method, it is preferable that a orientating film is not used for the perpendicular orientation treatment, because the production efficiency can be enhanced, and the liquid crystal display can be rendered light-weight and thin, and further, uniform coating can be achieved and the damage of substrate is avoided.

The coating solution of lyotropic crystal liquid molecules can be prepared using water or an organic solvent. As specific examples of the organic solvent, there can be mentioned amides such as N,N-dimethylformamide, sulfoxides such as dimethylsulfoxide; heterocyclic compounds such as pyridine, hydrocarbons such as benzene and hexane, halogenated compounds such as chloroform and methylene chloride, esters such as methyl acetate and butyl acetate, ketones such as acetone and methyl ethyl ketone, and ethers such as tetrahydrofuran and 1,2-dimethoxyethane.

The concentration of the solution of lyotropic liquid crystal molecules is not particularly limited, provided that the solution exhibits liquid crystal characteristics. Preferably the concentration of the solution is such that the amount of lyotropic liquid crystal molecules is in the range of 0.0001 to 100 parts by weight, more preferably 0.001 to 1 part by weight, based on 100 parts by weight of the solvent. No limitation is imposed to a coating method of the coating solution, and the coating method includes, for example, an extrusion coating method, a direct gravure coating method, a reverse gravure coating method and a die coating method.

The orientated lyotropic liquid crystal molecules are preferably fixed as they are in the orientated state. The fixing method includes, for example, a drying procedure for removing the solvent, a thermal polymerization procedure using a thermal polymerization initiator and a photo-polymerization procedure using a photo-polymerization initiator. By the orientation of the liquid crystal molecules, the maximum in-plane refractive index of the layer containing the liquid crystal molecules is manifested in a direction substantially parallel or substantially perpendicular to a disk surface of the liquid crystal molecules.

The photo-isomerizing substance is a substance capable of causing stereo-isomerization or structural isomerization. As the photo-isomerizing substance, a substance capable of causing reverse isomerization by light with different wavelengths or heat is preferably used. Such substance includes a photochromic compound causing change of color tone together with structural isomerization, and, as specific examples thereof, there can be mentioned azobenzene compounds, benzaldoxime compounds, azomethine compounds, stilbene compounds, spiropyran compounds, spiro-oxazine compounds, fulgide compounds, diaryl-eden compounds, cinnamic acid compounds, retinal compopunds and hemithioindigo compounds.

The photo-isomerizing substance may be either a low-molecular-weight compound or a polymer. The polymer has isomerizing group in the backbone chain or in side chains. The polymer may be either a homopolymer or a copolymer. The comonomer used for the preparation of the copolymer can be appropriately chosen so as to modify the photo-isomerizability and the glass transition temperature. The photo-isomerizing substance having a photo-isomerizing functional group used in the present invention may be a liquid crystal compound. That is, a liquid crystal compound having a photo-isomerizing functional group can be used in the present invention.

As a specific example of the photo-isomerizing substance, an acrylic acid ester polymer represented by the following formula [5] can be mentioned.

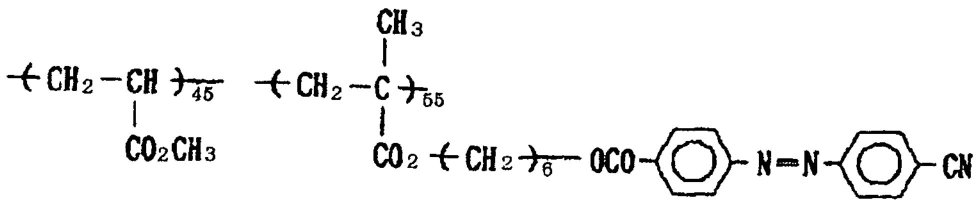

··· [5]

The method of forming a layer containing the photo-isomerizing substance is not particularly limited. For example, there can be adopted a method of coating a substrate with a solution containing the photo-isomerizing substance to form a filmy coating, drying the filmy coating, and then, irradiating the filmy coating with linearly polarized light. The linearly polarized light is preferably impinged onto the filmy coating from a perpendicular direction. The irradiation with the linearly polarized light can be carried out after the filmy coating is substantially dried. The passage "substantially dried" as used herein refers to the content of residual solvent in the coating becomes 30% by weight or less. The temperature of irradiation with the linearly polarized light can be appropriately chosen depending upon the particular content of residual solvent, but the temperature is preferably in the range of (Tg - 50)°C to (Tg + 30)°C. The light source for the linearly polarized light is not particularly limited, and, for example, a mercury lamp and halogen lamp can be used. By irradiation with the linearly polarized light, the maximum in-plane refractive index of the layer containing the photo-isomerizing substance is manifested in a direction substantially perpendicular to the axis of polarized light. Thus, an optically anisotropic body satisfying the formula:

$$(\Sigma n_{xi} + \Sigma n_{yi})/2 \leqq \Sigma n_{zi}$$

can be formed with enhanced efficiency.

The substrate used for coating a solution containing the photo-isomerizing substance thereon includes, for example, glass sheet, and film and sheet made of a synthetic resin. By laminating the photo-isomerizing substance on the surfaces of the polarizer and the optically anisotropic sheets, used in the present invention, the liquid crystal display can be rendered light-weight and thin, and the production efficiency can be enhanced.

The solvent used for the preparation of the solution containing the photo-isomerizing substance is not particularly limited, and, as specific examples thereof, there can be mentioned methanol, methylene chloride, acetone and methyl ethyl ketone. The concentration of the solution is not particularly limited, and can appropriately chosen so that a solution having a viscosity suitable for coating is prepared. Usually the concentration of the solution is preferably in the range of 1 to 50% by weight. No limitation is imposed to a coating method of the solution, and the coating can be conducted by using, for example, a bar coater, or a roll coater.

Generally in an in-plane switching (IPS) mode of aliquid crystal display, there can be used liquid crystal molecules which are orientated homogeneously in the horizontal direction, and two polarizers, one of which has a light transmission axis extending upwardly and downwardly, and the other of which has a light transmission axis extending in right and left directions, the two axes are perpendicular to each other. Therefore when the display surface is viewed obliquely from the upward and downward directions or the right and left directions, the two transmission axes are viewed perpendicularly to each other, and the homogeneously aligned liquid crystal layer exhibits a reduced refractive index as compared with that as observed in the twisted mode liquid crystal layer. Thus a sufficiently high contrast can be obtained.

In contrast, when the display surface is viewed obliquely at an azimuth of 45 degrees, the light transmission axes of the two polarizers cross at an intersecting angle apart from 90 degrees, and therefore, light leaks and a sufficiently black display cannot be obtained and the contrast is deteriorated.

In the liquid crystal display of in-plane switching mode according to the present invention, k optically anisotropic substance sheets satisfying the formula:

$$(\Sigma n_{xi} + \Sigma n_{yi})/2 \leqq \Sigma n_{zi}$$

are arranged between a pair of polarizers, and preferably the light transmission axes of the polarizers and the slow axis of the optically anisotropic substance sheets are substantially parallel or substantially perpendicular to each other, whereby phase difference caused by liquid crystal in a liquid crystal cell can be compensated and the viewing angle of the polarizers can also be compensated. By this structure of optical anisotropic substance sheets, the phase difference of transmission light can be effectively compensated, and consequently leakage of light can be prevented and a high contrast can be obtained over the whole azimuths.

The polarizers used for the liquid crystal display according to the present invention are not particularly limited, and include, for example, those which transmit linear polarized light when natural light is incident and which are produced by subjecting a film made of a vinyl alcohol polymer such as polyvinyl alcohol and partially formalized polyvinyl alcohol, to a dyeing treatment using dichromatic substance such as a dichromatic dye, and iodine, a drawing treatment and a crosslinking treatment. The thickness of polarizers is also not particularly limited, but is preferably in the range of 5 to 80 μm.

The polarizer is usually used as a polarizing sheet having a structure such that protective films are laminated on both sides of the polarizer. The protective film is preferably made of a polymer having high transparency, mechanical strength, heat stability and water repellency. As specific examples of such polymer, there can be mentioned polymers having an alicyclic structure, polyolefin, polycarbonate, polyethylene terephthalate, polyvinyl chloride, polystyrene, polyacrylonitrile, polysulfone, polyether-sulfone, polyarylate, triacetyl cellulose, and acrylic acid ester- or methacrylic acid ester-vinyl aromatic compound copolymer. Of these, polymers having an alicyclic structure, and polyethylene terephthalate are preferable in view of good transparency, light-weight, dimensional stability and film-thickness controllability. Triacetyl cellulose is also preferable in view of good transparency and light-weight.

The liquid crystal display according to the present invention may have a multilayer structure wherein the polarizer is arranged in direct contact with the optical multilayer body comprising the optically anisotropic substance sheets. In this structure, the optical multilayer body can have a function of protecting the polarizer.

The polymer having an alicyclic structure, used as a preferable example of the protective film-forming material, includes, for example, a norbornene polymer, a polymer of cycloolefin with a single ring, a vinyl alicyclic hydrocarbon polymer, and hydrogenation products of these polymers. Of these, a norbornene polymer is preferably used because of high transparency and good capability. The norbornene polymer includes, for example, a polymer prepared by ring-opening polymerization of a norbornene monomer, a copolymer prepared by ring-opening copolymerization of a norbornene monomer with other monomer, and hydrogenation products of these polymers; and an addition polymer of a norbornene monomer, an addition copolymer of a norbornene monomer with other monomer, and hydrogenation products of these polymers. Of these, a hydrogenation product of a polymer prepared by ring-opening polymerization of a norbornene monomer and a hydrogenation product of a copolymer prepared by ring-opening copolymerization of a norbornene monomer with other monomer are especially preferable because of high transparency.

In the case when the liquid crystal display has a multilayer structure wherein the polarizer is arranged in direct contact with the optical multilayer body, and the optical multilayer body has a function of protecting the polarizer, the polarizer may have been adhered to the optical multilayer body by means of adhesion using an adhesive or a pressure-sensitive adhesive. The adhesive and pressure-sensitive adhesive include, for example, acrylic, silicone, polyester, polyurethane, polyether and rubbery adhesives. Of these, acrylic adhesive and pressure-sensitive adhesive are preferable of high heat resistance and high transparency. The procedure by which the polarizer and the optical multilayer body are adhered together is not particularly limited. For example, there can be adopted a procedure of cutting each of the polarizer and the optical multilayer body into a desired size, and adhering together the cut polarizer and optical multilayer body; and a procedure of adhering together a continuous polarizer and a continuous optical multilayer body by roll-to-roll means.

In the liquid crystal display according to the present invention, the light emission side polarizer preferably has a protective film adhered onto the light emission side, which film has a hard coat layer and a low refractive index layer, formed in this order on the light emission surface of the protective film. The light emission surface of the protective film refers to the surface which is not contacted with the light emission side polarizer. By forming a hard coat layer and a low refractive index layer in this order on the light emission surface of the protective film laminated on the light emission side of the light emission side polarizer, the liquid crystal display has an enhanced antireflection function as well as an enhanced abrasion resistance and mar resistance, and thus the liquid crystal display exhibits more improved contrast.

The hard coat layer is a layer having a high surface hardness. More specifically, it refers to a layer having a hardness of at least HB as determined by the pencil hardness testing method according to JIS K 5600-5-4. A material used for forming the hard coat layer includes, for example, organic hard coat materials such as silicone material, melamine material, epoxy material, acrylic material and urethane acrylate material; and inorganic hard coat materials such as

silicon dioxide. Of these, urethane acrylate material and polyfunctional acryalte material are preferable because of high adhesion force and enhanced productivity.

The hard coat layer preferably has a high refractive index. By the term "high refractive index" as used herein, we mean that the hard coat layer has a refractive index larger than that of the low refractive index layer formed on the hard coat layer. The refractive index of the hard coat layer is preferably at least 1.50, more preferably at least 1.53 and especially preferably at least 1.55. When the refractive index of the hard coat layer is at least 1.55, the antireflection function is high in a wideband region, and undesirable mirroring of outer images can be prevented, the designing and formulation of the low refractive index layer to be formed thereon can be easy, and an optical multilayer film having improved abrasion resistance and stain resistance can be obtained. The refractive index can be determined, for example, by using a conventional spectroscopic ellipsometer.

The average thickness of the hard coat layer is not particularly limited, but is usually in the range of 0.5 to 30 $\mu$m, preferably 3 to 15 $\mu$m.

More preferably the hard coat layer contains inorganic oxide particles. By the incorporation of inorganic oxide particles, the hard coat layer can have more enhanced abrasion resistance and a hard coat layer having a refractive index of at least 1.55 can be easily obtained. The inorganic oxide particles used preferably have a high refractive index, more specifically, a refractive index of at least 1.6, preferably in the range of 1.6 to 2.3. As specific examples of such inorganic particles having a high refractive index, there can be mentioned titania (titanium oxide), zirconia (zirconium oxide), zinc oxide, tin oxide, cerium oxide, antimony pentoxide, tin-doped indium oxide (ITO), antimony-doped tin oxide (ATO), phosphorus-doped tin oxide (PTO), zinc-doped indium oxide (IZO), aluminum-doped zic oxide (AZO) and fluorine-doped tin oxide (FTO). Of these, antimony pentoxide is preferably used because it has a high refractive index and well balanced electrical conductivity and transparency, and therefore is suitable as material for adjusting refractive index.

The low refractive index layer is a layer having a refractive index smaller that that of the hard coat layer. The low refractive index layer preferably has a refractive index of not larger than 1.37, more preferably in the range of 1.37 to 1.25, and especially preferably 1.36 to 1.32. By imparting the desired low refractive index to the low refractive index layer, an optical multilayer film having good and well balanced visibility, abrasion resistance and mechanical strength, as well as good and well balanced antireflection function and abrasion resistance can be obtained. The low refractive index layer preferably has a thickness in the range of 10 to 1,000 nm, more preferably 30 to 500 nm. As the material for the low refractive index layer, aerogel is preferably used because the refractive index can be easily controlled and it has good water resistance. Aerogel is a transparent porous material having fine bubbles dispersed in a matrix. The most part of the bubbles have a diameter of not larger than 200 nm. The content of bubbles in the aerogel is preferably in the range of 10 to 60% by volume, more preferably 20 to 40% by volume. The aerogel includes, for example, silica aerogel, and a porous material having hollow particles dispersed in a matrix.

Silica aerogel can be made by a process wherein an alkxysilane is hydrolyzed and polymerized to give a gel-like material of a wet state having a silica backbone, and the gel-like material is dried in the presence of a solvent or dispersion medium such as an alcohol, carbon dioxide in a supercritical state under which the solvent or dispersion medium is placed in conditions exceeding the critical point. Such supercritical drying can be carried out, for example, by a procedure wherein the gel-like material is immersed in liquid carbon dioxide whereby a part or the whole of the solvent contained in the gel-like material is substituted by liquid carbon dioxide having a critical point lower than that of the solvent, and thereafter, the gel-like material is dried under supercritical conditions of the liquid carbon dioxide alone or a mixture of the liquid carbon dioxide and the solvent. Alternatively, silica aerogel can also be made from sodium silicate in the same manner as mentioned above. The refractive index of silica aerogel can be voluntarily varied depending upon the particular composition of the raw material.

The porous material having hollow particles dispersed in a matrix includes, for example, a porous material comprising fine hollow particles having a void or voids within each particle, which are dispersed in a binder resin matrix. The binder resin used preferably chosen from those which impart the desired dispersibility to the fine hollow particles, and the desired transparency and mechanical strength to the porous material, as specific examples thereof, there can be mentioned polyester resin, acrylic resin, urethane resin, vinyl chloride resin, epoxy resin, melamine resin, fluororesin, silicone resin, butyral resin, phenolic resin, vinyl acetate resin, ultraviolet-curable resin, electronic ray-curable resin, emulsion resin, water-soluble resin, hydrophilic resin, and mixtures of these resins, and copolymer resins and modified resins of these resins, suitable for coating, and hydrolysable organic silicon compounds such as alkoxysilane, and hydrolyzed products thereof. Of these, acrylic resin, epoxy resin, urethane resin, silicone resin, and hydrolysable organic silicon compounds such as alkoxysilane and hydrolyzed products thereof are preferable because fine particles exhibit enhanced dispersibility and these resins give a porous material having a high mechanical strength.

The above-mentioned hydrolysable organic silicon compounds such as alkoxysilane and hydrolyzed products thereof are made from at least one compound having $-(O-Si)_m-O-$ (where m is a natural number) bond in the molecule and is selected from the following (a) to (c)

(a) a compound represented by the formula (1): $SiX_4$

(b) at least one partially hydrolyzed product of the compound of formula (1)
(c) at least one completely hydrolyzed product of the compound of formula (1)

The fine hollow particles are not particularly limited provided that they are inorganic material, but preferably they are inorganic fine hollow particles each having a void within the outer shell, more preferably silica fine hollow particles. The inorganic hollow particles include, for example, those which have (A) a single layer composed of a single inorganic substance, (B) a single layer composed of a complex oxide comprising at least two different kinds of inorganic substances, and (c) double layers comprised of the above-mentioned (A) and (B).

The outer shell of the inorganic fine hollow particles may be porous which have fine open pores or fine closed pores. Preferably the outer shell has a double layer structure comprised of a first inner inorganic oxide covering layer and a second outer inorganic oxide covering layer. The second outer inorganic oxide covering layer may be treated so that the pores are clogged and the second covering layer is densified.

The second outer inorganic oxide covering layer is preferably made from a fluorine-containing organic silicon compound because the dispersibility thereof in an organic solvent is good, and a low refractive index layer having more lowered refractive index and enhanced stain resistance can be obtained. As specific examples of the fluorine-containing organic silicon compound, there can be mentioned 3,3,3-trifluoropropyltrimethoxysilane, methyl-3,3,3-trifluoropropyldimethoxysilane, heptadecafluorodecylmethyldimethoxysilane, heptadecafluorodecyltrichlorosilane, heptadecafluorodecyltrimethoxysilane, trifluoropropyltrimethoxysilane and tridecafluorooctyltrimethoxysilane.

The average particle diameter of the inorganic fine hollow particles are not particularly limited, but is preferably in the range of 5 to 2,000 nm, more preferably 20 to 100 nm. When the average particle diameter is smaller than 5 nm, it is often difficult to obtain a low refractive index layer. In contrast, when the average particle diameter is larger than 2,000 nm, the transparency is drastically reduced and diffuse reflection is undesirably increased. The average particle diameter can be determined as number average particle diameter by a transmission electron microscope observation.

The protective film for a light emission side polarizer exhibits a reflectivity of not larger than 1.4%, preferably not larger than 1.3%, as the maximum reflectivity as measured at an incident angle of 5° and a wavelength of 430 to 700 nm. More specifically, the protective film exhibits a reflectivity of not larger than 0.7%, preferably not larger than 0.6%, as measured at an incident angle of 5° and a wavelength of 550 nm. The protective film exhibits a reflectivity of not larger than 1.5%, preferably not larger than 1.4%, as the maximum reflectivity as measured at an incident angle of 20° and a wavelength of 430 to 700 nm. More specifically, the protective film exhibits a reflectivity of not larger than 0.9%, preferably not larger than 0.8%, as measured at an incident angle of 20° and a wavelength of 550 nm. When the protective film has the above-mentioned reflectivity, the glare of light and undesirable mirroring of outer images can be prevented and a polarizer having improved visibility can be obtained. The reflectivity is determined by a spectrophotometer (ultraviolet-visible-near infrared rays spectrophotometer V-550 available from JASCO Corporation).

An abrasion test using a steel wool pad for the determination of abrasion resistance of the protective film surface of the light emission side polarizer is carried out by reciprocally moving a pad of steel wool #000 with an imposed load of 0.025 MPa, ten times on the measurement surface of protective film, and observing the appearance of tested surface by the naked eyes.

The liquid crystal display according to the present invention may have provided therein additional parts such as a prism array sheet, a lens array sheet, a light diffuser plate, a back-light and a luminance enhancing film. These additional parts can be arranged at an appropriate location as a single layer or two or more layers. The back-light used in the liquid crystal display includes, for example, cold cathode-ray tube, mercury flat lamp, light emitting diode and electroluminescence.

## Examples

The invention will be described in more detail by the following examples that by no means limit the scope of the invention.

In examples of the invention and comparative examples, a polarizer having laminated thereon a polarizer-protecting film ("HLC2-5618" available from Sanritz Corporation) was used as an incident side polarizer, and the polarizer having a light reflection-preventing function, made in Production Example 14, was used as a light-emission side polarizer. As a liquid crystal cell, an in-plane switching mode liquid crystal cell having a thickness of 2.74 μm, a positive dielectric anisotropy, a birefringence $\Delta n$ of 0.09884 at a wavelength of 550 nm and a pretilt angle of 0 degree was used.

In the examples and comparative examples, measurement and evaluation of physical and optical properties were carried by the following methods.

(1) Thickness
An optical multilayer body is embedded in an epoxy resin, and a block of the epoxy resin is sliced into thin films each having a thickness of 0.05 μm by using a microtome ("RUB-2100" available from Yamato Kohki Industrial Co.,

Ltd.). The measurement of thickness is carried out by observing the cross-section of thin films. With regard to a multilayer, the thickness of each layer is measured.

(2) Principal refractive index

Using an automatic refractive index measuring instrument ("KOBRA-21" available from Oji Scientific Instruments), the direction of in-plane slow axis of an optical anisotropic substance is determined at a wavelength of 550 nm. A refractive index $n_x$ in the direction of the in-plane slow axis, a refractive index $n_y$ in the direction perpendicular to the in-plane slow axis, and a refractive index $n_z$ in the direction of thickness are measured.

(3) Retardation of optical multilayer body (A)

Using a fast spectroscopic ellipsometer ("M-2000U" available from J. A. Woolam Co.), a retardation $R_0$ as observed when light with a wavelength of 550 nm impinges at a right angle, and a retardation $R_{40}$ as observed when the light impinges at an inclination angle of 40 degrees from the normal are measured. The measurement of the retardation $R_{40}$ is conducted on the two directions, namely, a direction of a polar angle $\alpha$ wherein light is on the Y-Z plane as the slow axis of an optical multilayer body (A) being a rotation axis, and a direction of a polar angle $\beta$ wherein light is on the X-Z plane as the fast axis of the optical multilayer body (A) being a rotation axis.

(4) Viewing angle characteristics

Viewing angle characteristics of liquid crystal are evaluated by the naked eye observation when the display is viewed at a right angle at a black display, and when the display is viewed at a polar angle of not larger than 80 degrees.

(5) Reflectivity

Spectral reflectance is measured at an incident angle of 5 degrees by a spectrophotometer (ultraviolet-visible-near infrared rays spectrophotometer V-570 available from JASCO Corporation). The reflectivity at a wavelength of 550 nm is determined.

(6) Refractive index of low refractive index layer and refractive index of hard coat layer

Using a fast spectroscopic ellipsometer ("M-2000U" available from J. A. Woolam Co.), spectrophometric measurement is carried out at incident angles of 55, 60 and 65 degrees, and the refractive indexes are calculated from the photometric curve in a wavelength region of from 400 to 1000 nm.

(7) Abrasion resistance

A pad of steel wool #000 with an imposed load of 0.025 MPa is reciprocally moved ten times on a measurement surface. The appearance of tested surface is observed by the naked eyes, and evaluated by the following three ratings.

A: No mar is observed.
B: Surface is slightly marred.
C: Surface is marred to a considerable extent.

(8) Visibility

The display panel surface at a black display is observed by the naked eyes, and the visibility characteristics are evaluated by the following ratings.

A: No glare nor mirroring is observed.
B: Glare and/or mirroring is slightly observed.
C: Glare and/or mirroring is observed to a considerable extent.

(9) Wide band characteristics

A liquid crystal display panel is disposed under an environmental brightness of 100LX, and a reflected color is observed by the naked eyes. The wide band characteristics are expressed by the following two ratings.

A: Reflected color is black.
B: Reflected color is blue.

Production Example 1

(Production of multilayer film)

An undrawn multilayer film consisting of layer [1] (thickness: 33 μm), layer [3] (thickness: 8 μm), layer [2] (thickness: 65 μm) [2], layer [3] (thickness: 8 μm) and layer [1] (thickness: 33 μm), laminated in this order, was prepared by co-extrusion, wherein the layer [1] was made of a norbornene polymer ("Zeonor 1020" having a glass transition temperature of 105°C, available from Zeon Corporation), the layer [2] was made of a styrene-maleic anhydride copolymer having a glass transition temperature of 130°C and an oligomer content of 3% by weight, and the layer [3] was made of

a modified ethylene-vinyl acetate copolymer having a Vicat softening temperature of 80°C. The undrawn multilayer film was uniaxially stretched in the transverse direction at a temperature of 135°C, a draw ratio of 1.5 times and a drawing rate of 12%/min by a tenter to give a continuous film of optically anisotropic substance (A1) which has a slow axis extending in the longitudinal direction thereof.

The optically anisotropic substance (A1) film had principal indexes $n_x$ of 1.57024, $n_y$ of 1.56927 and $n_z$ of 1.57048, and a thickness d of 98 μm.

Production Example 2

(Production of multilayer film)

An undrawn multilayer film consisting of layer [1] (thickness: 38 μm), layer [3] (thickness: 10 μm), layer [2] (thickness: 76 μm) [2], layer [3] (thickness: 10 μm) and layer [1] (thickness: 38 μm), laminated in this order, was prepared by co-extrusion, wherein the layer [1] was made of a norbornene polymer ("Zeonor 1020" having a glass transition temperature of 105°C, available from Zeon Corporation), the layer [2] was made of a styrene-maleic anhydride copolymer having a glass transition temperature of 130°C and an oligomer content of 3% by weight, and the layer [3] was made of a modified ethylene-vinyl acetate copolymer having a Vicat softening temperature of 55°C. The undrawn multilayer film was uniaxially stretched in the transverse direction at a temperature of 134°C, a draw ratio of 1.7 times and a drawing rate of 12%/min by a tenter to give a continuous film of optically anisotropic substance (B1) which has a slow axis extending in the longitudinal direction thereof.

The optically anisotropic substance (B1) film had principal indexes $n_x$ of 1.57041, $n_y$ of 1.56878 and $n_z$ of 1.57082, and a thickness d of 101 μm.

Production Example 3

(Production of discotic liquid crystal-coated film)

Modified polyvinyl alcohol having a chemical structure represented by the chemical formula [6], shown below, was dissolved in a mixed solvent composed of methanol and acetone at a ratio of 50:50 by volume to prepare a solution having a concentration of 5% by weight. An optically isotropic transparent glass substrate having a square sheet form with a size of 40 cm × 30 cm was coated with the polymer solution by a bar coater to form a wet coating having a thickness of about 1 μm. The wet coating was dried under a stream of warm air at a temperature of 60°C for 2 minutes. The surface of coating was subjected to a rubbing treatment to give a vertically orientated film.

A coating solution containing 32. 6% by weight of a discotic liquid crystal having a chemical structure represented by the chemical formula [7] shown below, 0.7% by weight of cellulose acetate butyrate, 3.2% by weight of modified trimethylolpropane triacrylate, 0.4% by weight of a sensitizer, 1.1% by weight of a photopolymerization initiator and 62.0% by weight of methyl ethyl ketone was prepared. The above-mentioned vertically orientated film was coated with the coating solution to form a coating containing a homogeneously orientated discotic liquid crystal. The coating was irradiated with ultraviolet rays for 1 second by a mercury lamp with an illuminance of 500 $W/cm^2$ to effect polymerization to give a film of optically anisotropic substance (A3). The discotic liquid crystal molecules were homogeneously orientated in a manner such that the slow axis extends in the transverse direction of the optically anisotropic transparent glass substrate.

The optically anisotropic substance (A3) film had principal indexes $n_x$ of 1.63353, $n_y$ of 1.53293 and $n_z$ of 1.63353, and a disco liquid crystal layer thickness d of 4 μm.

Production Example 4

(Production of discotic liquid crystal-coated film)

A continuous undrawn film having a thickness of 100 μm was made by co-extrusion of a norbornene polymer ("Zeonor 1420R" having a glass transition temperature of 136°C, available from Zeon Corporation).

A coating solution containing 5% by weight of a modified polyvinyl alcohol having a chemical structure represented by the chemical formula [8], shown below, in a mixed solvent composed of methanol and acetone at a ratio of 50:50 by volume. The above-mentioned continuous undrawn film was coated with the coating solution to form a wet coating having a thickness of about 1μm. The wet coating was dried under a stream of warm air at a temperature of 60°C for 2 minutes. The surface of coating was subjected to a rubbing treatment to give a vertically orientated film.

A coating solution containing 22. 3% by weight of a discotic liquid crystal having a chemical structure represented by the chemical formula [8] shown below, 0.7% by weight of cellulose acetate butyrate, 3.2% by weight of modified

trimethylolpropane triacrylate, 0.4% by weight of a sensitizer, 1.1% by weight of a photopolymerization initiator and 72.3% by weight of methyl ethyl ketone was prepared. The above-mentioned vertically orientated film was coated with the coating solution to form a coating containing a homogeneously orientated discotic liquid crystal. The coating was irradiated with ultraviolet rays for 1 second by a mercury lamp with an illuminance of 500 W/$cm^2$ to effect polymerization to give a film of optically anisotropic substance (B3). The discotic liquid crystal molecules were homogeneously orientated in a manner such that the slow axis extends in the longitudinal direction of the optically anisotropic substance (B3) film.

The optically anisotropic substance (B3) film had principal indexes $n_x$ of 1.60497, $n_y$ of 1.59006 and $n_z$ of 1.60497, and a disco liquid crystal layer thickness d of 4 μm.

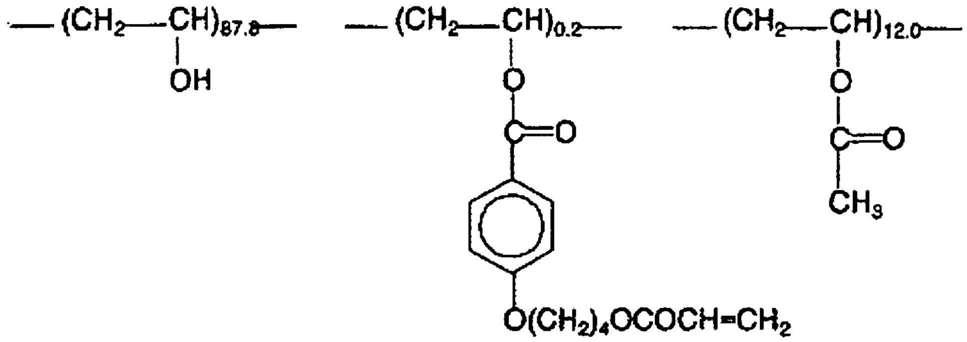

··· [6] .

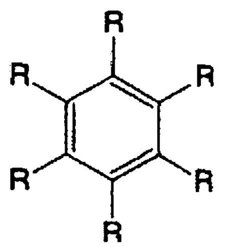

R is

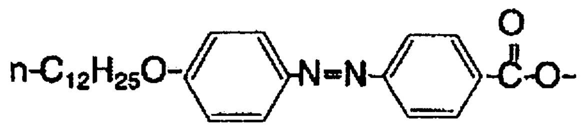

··· [7]

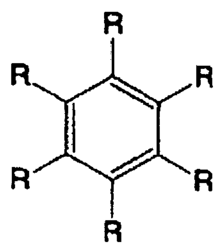

R is

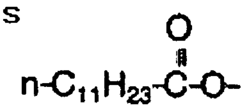

··· [8]

Production Example 5

(Production of lyotropic liquid crystal-coated film)

A continuous undrawn film having a thickness of 100 μm was made by co-extrusion of a norbornene polymer ("Zeonor 1420R" having a glass transition temperature of 136°C, available from Zeon Corporation).

The continuous undrawn film was coated with a coating solution comprising 8.0% by weight of a lyotropic liquid

crystal molecule having a chemical structure represented by the chemical formula [3], and 92.0% by weight of water, without use of an orientated film, by a die coater while a shearing force was applied in the transverse direction to form a wet coating. The wet coating was left to stand in an argon atmosphere at a temperature of 118°C to evaporate water to give a film of optically anisotropic substance (A5). The lyotropic liquid crystal molecules were homogeneously orientated in a manner such that the slow axis extends in the longitudinal direction of the continuous undrawn film.

The optically anisotropic substance (A5) film had principal indexes $n_x$ of 1.61311, $n_y$ of 1.57377 and $n_z$ of 1.61511, and a lyotropic liquid crystal layer thickness d of 2.5 μm.

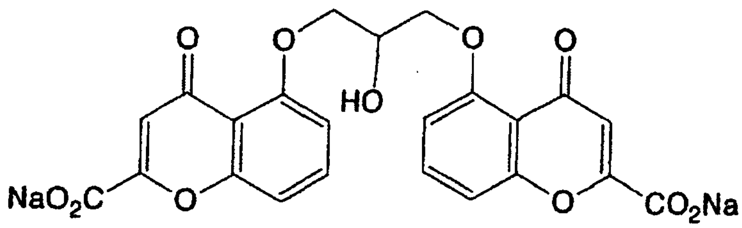

... [3]

Production Example 6

(Production of lyotropic liquid crystal-coated film)

A continuous undrawn film having a thickness of 100 μm was made by co-extrusion of a hydrogenation product of a styrene-styrene/isoprene-styrene (molar ratio = 34.5:10/21: 34.5) block copolymer wherein the unsaturated bonds including those in the aromatic rings were hydrogenated.

The continuous undrawn film was coated with a coating solution comprising 6.0% by weight of a lyotropic liquid crystal molecule having a chemical structure represented by the chemical formula [3], and 94.0% by weight of water, without use of an orientated film, by a die coater while a shearing force was applied in the longitudinal direction to form a wet coating. The wet coating was left to stand in an argon atmosphere at a temperature of 108°C to evaporate water to give a film (B5) of an optically anisotropic substance. The lyotropic liquid crystal molecules were homogeneously orientated in a manner such that the slow axis extends in the transverse direction of the continuous undrawn film.

The optically anisotropic substance film (B5) had principal indexes $n_x$ of 1.61311, $n_y$ of 1.57377 and $n_z$ of 1.61311, and a lyotropic liquid crystal layer thickness d of 4.5 μm.

Production Example 7

(Production of azobenzene-coated film)

8.0 g of a copolymer having an azobenzene structure represented by the chemical formula [5], shown below, was dissolved in 100 g of a mixed solvent composed of methanol and methylene chloride at a ratio of 1:9 by weight to prepare a solution. An isotropically isotropic transparent glass substrate of a square shape with a size of 40 cm length × 30 cm width was coated with the solution by a bar coater to form a wet coating having a thickness of 4 μm as expressed in terms of dry film thickness. While the wet coating was heated at a temperature of 40°C, the coating was irradiated with linear polarized light at an illuminance of 1000 lux by applying a light vertically to the substrate using a halogen lamp, which polarized light was made in parallel to the width direction of the glass substrate by using an iodine-containing polarizer, whereby a film of optically anisotropic substance (A7) having a slow axis extending in the length direction was obtained.

The thus-obtained optically anisotropic substance (A7) film had principal indexes $n_x$ of 1.62188, $n_y$ of 1.55623 and $n_z$ of 1.62188, and the copolymer layer having an azobenzene structure had a thickness d of 4 μm.

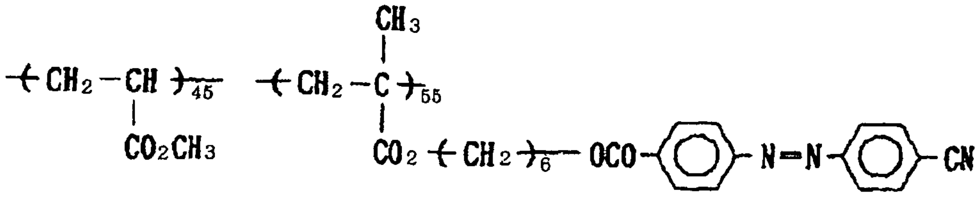

... [5]

Production Example 8

(Production of azobenzene-coated film)

A continuous undrawn film having a thickness of 141 μm was made by co-extrusion of a was made by co-extrusion of a norbornene polymer ("Zeonor 1420R" having a glass transition temperature of 136°C, available from Zeon Corporation). The undrawn film was uniaxially stretched in the longitudinal direction at a drawing temperature of 143°C, a draw ratio of 1.5 and a draw rate of 16%/min by using nip rolls to give a continuous optically isotropic substance film having a slow axis extending in the longitudinal direction.

8.0 g of a copolymer having an azobenzene structure represented by the chemical formula [5] was dissolved in 100 g of a mixed solvent composed of methanol and methylene chloride at a ratio of 1:9 by weight to prepare a solution. The above-mentioned continuous optically isotropic substance film was coated with the solution by a bar coater to form a wet coating having a thickness of 4 μm as expressed in terms of dry film thickness. While the wet coating was heated at a temperature of 40°C, the coating was irradiated with linear polarized light at an illuminance of 1000 lux by applying a light vertically to the film using a halogen lamp, which polarized light was made in parallel to the transverse direction of the continuous film by using an iodine-containing polarizer, whereby a film of optically anisotropic substance (B7) having a slow axis extending in the longitudinal direction was obtained.

The thus-obtained optically anisotropic substance (B7) film had principal indexes $n_x$ of 1.55130, $n_y$ of 1.54870 and $n_z$ of 1.55000, and a thickness d of 104 μm.

Production Example 9

(Production of styrene polymer film)

90 parts by weight of a monomer mixture of strene/acrylonitrile/α-methylstyrene (weight ratio of 60/20/29) was graft-polymerized onto 10 parts by weight of a styrene/butadiene (weight ratio of 20/80) copolymer to give a styrene polymer. 170 g of the styrene polymer was dissolved in 830 g of methylene chloride. The solution was cast on a glass sheet to form a wet film having a thickness of 96 μm as expressed by dry film thickness. The wet film was dried under a warm air stream at 45°C for 20 minutes. The dried film was peeled from the glass sheet, and spread on a frame where the film was further dried at 70°C for one hour and then at 110°C for 15 hours. The dried film was uniaxially stretched in the longitudinal direction at a drawing temperature of 115°C and a draw ratio of 1.9 by a tensile tester (Strograph) to give a film of optically anisotropic substance (C1).

The thus-obtained optically anisotropic substance (C1) film had principal indexes $n_x$ of 1.55058, $n_y$ of 1.54884 and $n_z$ of 1.55058, and a thickness d of 70 μm.

Production Example 10

(Preparation of coating solution for forming hard coat layer)

30 parts of hexa-functional urethane acrylate oligomer ("NK Oligo U-6HA" available from Shin-Nakamura Chem. Co.), 40 parts of butyl acrylate, 30 parts of isoboronyl methacrylate ("NK Ester IB" available from Shin-Nakamura Chem. Co.) and 10 parts of 2,2-diphenylethan-1-on were mixed together by a homogenizer. The mixture was mixed with a solution of fine antimony pentoxide particles in 40% MIBK to prepare a coating solution for forming a hard coat layer. The antimony pentoxide particles had an average article diameter of 20 nm and a pyrochlore structure such that one hydroxyl group is bonded to each antimony atom appearing on the surface of the structure. The hard coat layer-forming coating solution contained the fine antimony pentoxide particles at a concentration of 50% by weight based on the total

solid content in the coating solution.

Production Example 11

(Preparation of coating solution for forming low refractive index layer)

356 parts of methanol was added to 208 parts of tetraethoxysilane. To the thus-obtained mixture, 18 parts of water and 18 parts of an aqueous 0.01N hydrochloric acid ([$H_2O$] / [OR] ratio= 0.5) were added, and the mixture was thoroughly mixed together by a disper. The thus-obtained mixed liquid was stirred in a thermostat maintained at 25°C for 2 hours whereby a solution of silicone resin having a weight average molecular weight of 850 was prepared. Then fine hollow silica particles in the form of a dispersion in IPA (isopropanol) (solid content: 20% by weight, average primary particle diameter: about 35 nm, shell thickness: about 8 nm, available from Catalysts and Chemicals Ind. Co.) was incorporated in the silicone resin solution at a ratio such that hollow fine silica particles/silicone resin = 70/30 by weight as solid content ratio (the amount of the silicone resin solution was expressed as the amount of condensed compound). The thus-obtained mixed liquid was diluted with methanol so that the total solid content became 1%, to give a coating solution for forming a low refractive index layer.

Production Example 12

(Manufacture of polarizer)

PVA film having a thickness of 85 μm ("Vinylon #8500" available from Kurary Co. Ltd.) was fitted to chucks and drawn at 2.5 times. The drawn film was immersed in an aqueous solution containing 0.2 g/L of iodine and 60 g/L of potassium iodide at 30°C for 240 seconds, and then immersed in an aqueous solution containing 70 g/L of boric acid and 30 g/L of potassium iodide. Then the film in the immersed state was uniaxially drawn at 6.0 times and kept for 5 minutes. Finally the film was dried at room temperature for 24 hours to give a polarizer having an average thickness of 30 μm and a polarization degree of 99.993%.

Production Example 13

(Manufacture of protective film for light emission side polarizer)

Pellets of a norbornene polymer ("Zeonor 1420R" having a glass transition temperature of 136°C and a saturated moisture absorption of smaller than 0.01% by weight, available from Zeon Corporation) were dried in a hot air stream at 100°C for 4 hours. The dried pellets were melt-extruded through a short axis extruder at 260°C to give a protective film for a polarizer, having a thickness of 40 μm and a width of 600 mm. The extruder used had a coat hanger type T-die having a lip width of 650 mm and an average surface roughness Ra of 0.04μm. A tip portion of the die lip of the T-die was plated with chromium. The T-die was provided with a polymer filter of a leaf disk shape having a filtration precision of 30μm. The resultant protective film had a saturated moisture absorption of smaller than 0.01% by weight.

Production Example 14

(Manufacture of polarizer having antireflection function)

A polarizer having antireflection function was manufactured by the coating process shown in Fig. 14. In Fig. 14, reference numeral 14 is a feed roll from which a wound film is continuously taken, 11 is a coater such as micro-gravure coater for coating a hard coat layer or a low refractive index layer, provided down stream from the feed roll 14. Reference numerals 16 to 19 are guide rolls for guiding the film taken from the roll 14 to the succeeding steps. 12 is a drying zone for drying the hard coat layer or the low refractive index layer, formed by the coater 11. 13 is a light irradiating apparatus for curing the hard coat layer or the low refractive index layer. 15 is a take-up roll for winding a film having the hard coat layer or the low refractive index layer.

A treating apparatus for surface modification (not shown in Fig. 14), for example, a corona discharge apparatus, may be provided upstream to the coater 11. In the drying zone 12, a single-stage dryer or a multi-step dryer having two or more drying zones with different temperatures may be arranged. The film may be subjected to moisture conditioning in a constant- temperature, constant-humidity chamber arranged upstream to the take-up roll 15.

The outline of the coating process will be described with reference to Fig. 4. The protective film wound around the feed roll is continuously taken off. If desired, the protective film taken is subjected to a surface modification treatment, for example, a corona discharge treatment (a treating apparatus is not shown). The protective film is then fed through

a guide roll 16 to a coater 11 for coating the protective film with a hard coat layer-forming composition or a low refractive layer-forming composition. The coated protective film is fed through a guide roll 17 to a drying zone where volatile ingredients are removed. Then the protective film is fed through a guide roll 18 to a light irradiation apparatus where the coating of the hard coat layer-forming composition or the low refractive layer-forming composition is irradiated with light to form a cured hard coat layer or a cured low refractive index layer. Then the protective film having the cured hard coat layer or cured low refractive index layer is fed into a constant-temperature, constant-humidity chamber (not shown) according to the need. Then the film is fed through a guide roll 19 to a wind-up roll 15.

(Formation of hard coat layer)

In this production example 14, the hard coat layer was formed on the continuous protective film for polarizer, made in Production Example 13, by the following procedures using an apparatus as illustrated in Fig. 14.

The protective film was wound around the feed roll 14. The film was taken from the feed roll 14 and fed through a guide roll to a surface modifying apparatus (not shown) where corona discharge treatment was carried out at an output of 0.8 kW. Then the film was fed through guide roll 16 to coater 11 (in this example, a micro-gravure coater was used) . Thus the film was coated with a hard coat layer-forming composition at a temperature of 25°C and a relative humidity of 60% to form a wet coating having a thickness of 5 μm as expressed by dry film thickness. The wet coating was fed through guide roll 17 to a drying apparatus 12. In this example, drying was carried out in three stages, i.e, at 80°C, 100°C and 120°C in first, second and third stages, respectively. The relative humidity in each of the three stages was below 5%. Then the dried film was fed through guide roll 18 to an ultraviolet irradiation apparatus 13 where the film was irradiated with ultraviolet rays at an output of 320 W/cm and an irradiation distance of 60 mm. Then the film was fed through a guide roll into a constant-temperature, constant-humidity chamber (not shown) maintained at a temperature of 25°C and a relative humidity of 60%. Finally the film was fed through guide roll 19 and wound around take-up roll 15. Thus a continuous film having a hard coat layer on one maj or surface thereof was obtained.

(Formation of low refractive index layer)

Then a low refractive index layer was formed on the hard coat layer of the film by the following procedures using an apparatus as illustrated in Fig. 14.

The protective film having the hard coat layer was wound around feed roll 14. The film was taken from the feed roll and fed through a guide roll to a surface modifying apparatus (not shown) where corona discharge treatment was carried out at an output of 1.6 kW. Then the film was fed through guide roll 16 to coater 11 (in this example, a micro-gravure coater was used). Thus the hard coat layer of film was coated with a low refractive index layer-forming composition at a temperature of 25°C and a relative humidity of 60% to form a wet coating having a thickness of 100 nm as expressed by dry film thickness. The wet coating was fed through guide roll 17 to a drying apparatus 12. In this example, drying was carried out in three stages, i.e, at 40°C, 120°C and 120°C in first, second and third stages, respectively. The relative humidity in each of the three stages was below 5%. Then the dried film was fed through guide roll 18 to an ultraviolet irradiation apparatus 13 where the film was irradiated with ultraviolet rays at an output of 160 W/cm and an irradiation distance of 60 mm. Then the film was fed through a guide roll into a constant-temperature, constant-humidity chamber (not shown) maintained at a temperature of 80°C and a relative humidity of 70% for one minute. Finally the film was fed through guide roll 19 and wound around take-up roll 15. Thus a continuous film having a hard coat layer and a low refractive index layer, laminated in this order, on one major surface thereof was obtained.

(Adhesion of polarizer-protecting film)

The protective film side of the above-mentioned film having a hard coat layer and a low refractive index layer was adhered to a polarizer made in Production Example 12 through an acrylic adhesive "DP-8005 Clear" available from Sumitomo 3M Ltd. to give a light emission side polarizer having an anti-reflective function.

The light emission side polarizer having an anti-reflective function was used in all of Examples 1 to 4, described below, wherein the non-coated polarizer side (i.e., the side not having a hard coat layer and a low refractive index layer) of the light emission side polarizer was adhered to the optical multilayer body.

Example 1

(Production of liquid crystal display)

As illustrated in Fig. 2, film 3 of optically anisotropic substance (B1) prepared in Production Example 2, liquid crystal cell 2 and film 4 of optically anisotropic substance (A1) prepared in Production Example 1 were laminated in this

order in a manner such that the slow axis of optically anisotropic substance (B1) film 3 is perpendicular to the slow axis of liquid crystal cell 2 at voltage-non-imposition, and the slow axis of liquid crystal cell 2 at voltage-non-imposition is parallel to the slow axis of optically anisotropic substance (A1) film 4, to give an optical multilayer body.

In the optical multilayer body, retardation $R_0$ when light having wavelength of 550 nm was vertically incident was 201 nm, $R_{40}$ when the light was incident at 40 degrees inclined from the normal was 198 nm in $\alpha$ direction and 207 nm in $\beta$ direction, and thus $R_0/R_{40}$ was 0.99 in $\alpha$ direction and 1.03 in $\beta$ direction.

An incident side polarizer 1 and a light emission side polarizer 5 were laminated together with the above-mentioned optical multilayer body in a manner such that the absorption axis of the incident side polarizer 1 is parallel to the slow axis of optically anisotropic substance (B1) film 3, and the slow axis of optically anisotropic substance (A1) film 4 is parallel to the absorption axis of light emission side polarizer 5, to give a liquid crystal display having a multilayer structure as illustrated in Fig. 2. In Fig. 2, Fig. 4, Fig. 6, Fig. 8 and Fig. 10, arrows indicate the absorption axis of polarizer and the axes of liquid crystal cell and optically anisotropic substance.

The viewing angle characteristics of the liquid crystal display were evaluated by the naked eyes. Good and homogeneous images could be observed when an image was viewed from the vertical direction and when it was viewed from a polar angle of smaller than 80 degrees. Contrast curves obtained by simulation of the liquid crystal display are shown in Fig. 3. In Fig. 3, Fig. 5, Fig. 7, Fig. 9, Fig. 11 and Fig. 13, a contour line "CR 1000" expressed by a dashed line indicates locations with a contrast of 1000, a contour line "CR500" expressed by a solid line indicates locations with a contrast of 500, and a contour line "CR 300" expressed by a chain double-dashed line indicates locations with a contrast of 300.

## Example 2

(Production of liquid crystal display)

As illustrated in Fig. 4, film 3 of optically anisotropic substance (B3) prepared in Production Example 4, film 4 of optically anisotropic substance (A3) prepared in Production Example 3, and liquid crystal cell 2 were laminated in this order in a manner such that the slow axis of optically anisotropic substance (B3) film 3 is perpendicular to the slow axis of optically anisotropic substance (A3) film 4, and the slow axis of optically anisotropic substance (A3) film 4 is parallel to the slow axis of liquid crystal cell 2 at voltage-non-imposition, to give an optical multilayer body.

In the optical multilayer body, retardation $R_0$ when light having wavelength of 550 nm was vertically incident was 614 nm, $R_{40}$ when the light was incident at 40 degrees inclined from the normal was 600 nm in $\alpha$ direction and 633 nm in $\beta$ direction, and thus $R_0/R_{40}$ was 0.98 in $\alpha$ direction and 1.03 in $\beta$ direction.

A light incident side polarizer 1 and a light emission side polarizer 5 were laminated together with the above-mentioned optical multilayer body in a manner such that the absorption axis of the incident side polarizer 1 is parallel to the slow axis of optically anisotropic substance (B3) film 3, and the slow axis of liquid crystal cell 2 at voltage-non-imposition is parallel to the absorption axis of light emission side polarizer 5, to give a liquid crystal display having a multilayer structure as illustrated in Fig. 4.

The viewing angle characteristics of the liquid crystal display were evaluated by the naked eyes. Good and homogeneous images could be observed when an image was viewed from the vertical direction and when it was viewed from a polar angle of smaller than 80 degrees. Contrast curves obtained by simulation of the liquid crystal display are shown in Fig. 5.

## Example 3

(Production of liquid crystal display)

As illustrated in Fig. 6, liquid crystal cell 2, film 3 of optically anisotropic substance (B5) prepared in Production Example 6, and film 4 of optically anisotropic substance (A5) prepared in Production Example 5 were laminated in this order in a manner such that the slow axis of liquid crystal cell 2 at voltage-non-imposition is perpendicular to the slow axis of optically anisotropic substance (B5) film 3, and the slow axis of optically anisotropic substance (B3) film 3 is perpendicular to the slow axis of optically anisotropic substance (A5) film 4, to give an optical multilayer body.

In the optical multilayer body, retardation $R_0$ when light having wavelength of 550 nm was vertically incident was 192 nm, $R_{40}$ when the light was incident at 40 degrees inclined from the normal was 199 nm in $\alpha$ direction and 184 nm in $\beta$ direction, and thus $R_0/R_{40}$ was 1.04 in $\alpha$ direction and 0.96 in $\beta$ direction.

An incident side polarizer 1 and a light emission side polarizer 5 were laminated together with the above-mentioned optical multilayer body in a manner such that the absorption axis of the incident side polarizer 1 is parallel to the slow axis of liquid crystal cell 2 at voltage-non-imposition, and the slow axis of optically anisotropic substance (A5) film 4 is parallel to the absorption axis of light emission side polarizer 5, to give a liquid crystal display having a multilayer

structure as illustrated in Fig. 6.

The viewing angle characteristics of the liquid crystal display were evaluated by the naked eyes. Good and homogeneous images could be observed when an image was viewed from the vertical direction and when it was viewed from a polar angle of smaller than 80 degrees. Contrast curves obtained by simulation of the liquid crystal display are shown in Fig. 7.

Example 4

(Production of liquid crystal display)

As illustrated in Fig. 8, film 3 of optically anisotropic substance (B7) prepared in Production Example 8, film 4 of optically anisotropic substance (A7) prepared in Production Example 7, and liquid crystal cell 2 were laminated in this order in a manner such that the slow axis of optically anisotropic substance (B7) film 3 is perpendicular to the slow axis of optically anisotropic substance (A7) film 4, and the slow axis of optically anisotropic substance (A7) film 4 is perpendicular to the slow axis of liquid crystal cell 2 at voltage-non-imposition, to give an optical multilayer body.

In the optical multilayer body, retardation $R_0$ when light having wavelength of 550 nm was vertically incident was 279 nm, $R_{40}$ when the light was incident at 40 degrees inclined from the normal was 267 nm in $\alpha$ direction and 287 nm in $\beta$ direction, and thus $R_0/R_{40}$ was 0.96 in $\alpha$ direction and 1.03 in $\beta$ direction.

A light incident side polarizer 1 and a light emission side polarizer 5 were laminated together with the above-mentioned optical multilayer body in a manner such that the absorption axis of the light incident side polarizer 1 is perpendicular to the slow axis of optically anisotropic substance (B7) film 3, and the slow axis of liquid crystal cell 2 at voltage-non-imposition is parallel to the absorption axis of light emission side polarizer 5, to give a liquid crystal display having a multilayer structure as illustrated in Fig. 8.

The viewing angle characteristics of the liquid crystal display were evaluated by the naked eyes. Good and homogeneous images could be observed when an image was viewed from the vertical direction and when it was viewed from a polar angle of smaller than 80 degrees. Contrast curves obtained by simulation of the liquid crystal display are shown in Fig. 9.

Comparative Example 1

(Production of liquid crystal display)

As illustrated in Fig. 10, liquid crystal cell 2 and film 3 of optically anisotropic substance (C1) prepared in Production Example 9 were laminated in a manner such that the slow axis of liquid crystal cell 2 at voltage-non-imposition is perpendicular to the slow axis of optically anisotropic substance (C1) film 3, to give an optical multilayer body.

In the optical multilayer body, retardation $R_0$ when light having wavelength of 550 nm was vertically incident was 149 nm, $R_{40}$ when the light was incident at 40 degrees inclined from the normal was 167 nm in $\alpha$ direction and 129 nm in $\beta$ direction, and thus $R_0/R_{40}$ was 1.12 in $\alpha$ direction and 0.87 in $\beta$ direction.

An incident side polarizer 1 and a light emission side polarizer 5 were laminated together with the above-mentioned optical multilayer body in a manner such that the absorption axis of the incident side polarizer 1 is perpendicular to the slow axis of liquid crystal cell 2 at voltage-non-imposition, and the slow axis of optically anisotropic substance (C1) film 3 is parallel to the absorption axis of light emission side polarizer 5, to give a liquid crystal display having a multilayer structure as illustrated in Fig. 10.

The viewing angle characteristics of the liquid crystal display were evaluated by the naked eyes. Good images could be observed when an image was viewed from the vertical direction, but the quality at black display was poor and the contrast was low when it was viewed obliquely from an azimuth of 45 degrees. Contrast curves obtained by simulation of the liquid crystal display are shown in Fig. 11.

Comparative Example 2

(Production of liquid crystal display)

As illustrated in Fig. 12, film 3 of optically anisotropic substance (C1) prepared in Production Example 9, liquid crystal cell 2 and film 4 of optically anisotropic substance (C1) prepared in Production Example 9 were laminated in a manner such that the slow axis of optically anisotropic substance (C1) film 3 is perpendicular to the slow axis of liquid crystal cell 2 at voltage-non-imposition, and the slow axis of liquid crystal cell 2 at voltage-non-imposition is perpendicular to the slow axis of optically anisotropic substance (C1) film 4, to give an optical multilayer body.

In the optical multilayer body, retardation $R_0$ when light having wavelength of 550 nm was vertically incident

was 27 nm, $R_{40}$ when the light was incident at 40 degrees inclined from the normal was 32 nm in α direction and 19 nm in β direction, and thus $R_0/R_{40}$ was 1.19 in α direction and 0.70 in β direction.

An incident side polarizer 1 and a light emission side polarizer 5 were laminated together with the above-mentioned optical multilayer body in a manner such that the absorption axis of the incident side polarizer 1 is parallel to the slow axis of optically anisotropic substance (C1) film 3, and the slow axis of optically anisotropic substance (C1) film 4 is perpendicular to the absorption axis of light emission side polarizer 5, to give a liquid crystal display having a multilayer structure as illustrated in Fig. 12.

The viewing angle characteristics of the liquid crystal display were evaluated by the naked eyes. Good images could be observed when an image was viewed from the vertical direction, but the quality at black display was poor and the contrast was low when it was viewed obliquely from an azimuth of 45 degrees. Contrast curves obtained by simulation of the liquid crystal display are shown in Fig. 13.

The evaluation results obtained in Examples 1 to 4 and Comparative Examples 1 and 2 are collectively shown in Table 1.

Table 1

| Example | Direction | $(\Sigma n_{xi}+\Sigma n_{yi})/\Sigma n_{zi}$ | $R_0$ (nm) | $R_{40}$ (nm) | $R_{40}/R_0$ | LCD*1 |
|---|---|---|---|---|---|---|
| Ex. 1 | α | 1.9989 | 201 | 198 | 0.99 | A |
| | β | | | 207 | 1.03 | |
| Ex.2 | α | 1.9643 | 614 | 600 | 0.98 | A |
| | β | | | 633 | 1.03 | |
| Ex.3 | α | 1.9756 | 192 | 199 | 1.04 | A |
| | β | | | 183 | 0.95 | |
| Ex.4 | α | 1.9793 | 279 | 267 | 0.96 | A |
| | β | | | 288 | 1.03 | |
| Comp. Ex.1 | α | - | 149 | 167 | 1.12 | B |
| | β | | | 129 | 0.87 | |
| Comp. Ex. 2 | α | 1.9989 | 27 | 32 | 1.19 | B |
| | β | | | 19 | 0.7 | |

Note, *1 A: Good and homogeneous images could be observed when an image was viewed from the vertical direction and when they were viewed from a polar angle of smaller than 80 degrees.
B: Good images could be observed when an image was viewed from the vertical direction, but the quality at black display was poor and the contrast was low when they were viewed obliquely from an azimuth of 45 degrees.

As seen from Table 1, in the liquid crystal displays described in Examples 1 to 4, which have two optically anisotropic substance sheets and a liquid crystal cell between a light emission side polarizer and a light incident side polarizer, and satisfy the following formula:

$$(\Sigma n_{xi} + \Sigma n_{yi})/2 \leqq \Sigma n_{zi}$$

and wherein $R_{40}/R_0$ is in the range of 0.96 to 1.04, good and homogeneous images can be observed when they are viewed from the vertical direction and when they are viewed from a polar angle of smaller than 80 degrees.

In contrast, in the liquid crystal display described in Comparative Example 1 which has a single optically anisotropic substance sheet and a liquid crystal cell between a light emission side polarizer and a light incident side polarizer, and wherein $R_{40}/R_0$ in α direction is 1. 12 and $R_{40}/R_0$ in β direction is 0.87, good images can be observed when they are viewed from the vertical direction, but the quality at black display is poor and the contrast is low when they are viewed obliquely from an azimuth of 45 degrees.

In contrast, in the liquid crystal display described in Comparative Example 2 which has two optically anisotropic

substance sheets and a liquid crystal cell between a light emission side polarizer and a light incident side polarizer, and satisfies the following formula:

$$(\Sigma n_{xi} + \Sigma n_{yi})/2 \leqq \Sigma n_{zi}$$

but, $R_{40}/R_0$ in $\alpha$ direction is 1.19 and $R_{40}/R_0$ in $\beta$ direction is 0.70, good images can be observed when they are viewed from the vertical direction, but the quality at black display is poor and the contrast is low when they are viewed obliquely from an azimuth of 45 degrees. Table 2

| Example | Refractive index | | Visibility | Reflectivity | Wideband charact. | Abrasion resistance |
|---|---|---|---|---|---|---|
| | LRI layer | HC layer | | | | |
| Ex.1 | 1.36 | 1.62 | A | 0.6 | A | A |
| Ex.2 | 1.36 | 1.62 | A | 0.6 | A | A |
| Ex.3 | 1.36 | 1.62 | A | 0.6 | A | A |
| Ex. 4 | 1.36 | 1.62 | A | 0.6 | A | A |
| Co. Ex. 1 | - | - | C | 5.0 | - | - |
| Co. Ex. 2 | - | - | C | 5.0 | - | - |
| LRI layer: Low refractive index layer<br>HC layer: Hard coat layer | | | | | | |

As seen from Table 2, the liquid crystal displays described in Examples 1 to 4, exhibit good visibility (i.e., glare and mirroring are not observed), low refractive index, black color reflection, and good abrasion resistance. In contrast, the liquid crystal displays described in Comparative Examples 1 and 2 exhibit poor visibility (i.e., glare and mirroring are observed), high refractive index, blue color reflection, and poor abrasion resistance.

Industrial Applicability

The liquid crystal display according to the present invention exhibits improved reflection prevention and abrasive resistance, and is characterized in that when an image on the display is viewed from an oblique direction, the deterioration in contrast can be prevented or minimized without substantial deterioration of image characteristics as viewed from a vertical direction, and well qualified images are manifested at black display for wide view angles, and homogeneous images with a high contrast are obtained.

In view of the above-mentioned benefits, the liquid crystal display according to the present invention is especially suitable for a flat panel display with a large picture plane.

## Claims

1. An in-plane switching mode liquid crystal display having at least two optically anisotropic substance sheets and a liquid crystal cell between a pair of polarizers consisting of a light incident side polarizer and a light emission side polarizer, which have light transmission axes substantially perpendicular to each other, **characterized in that** the liquid crystal display satisfies the following formula:

$$(\Sigma n_{xi} + \Sigma n_{yi})/2 \leqq \Sigma n_{zi}$$

wherein $\Sigma$ is the total sum of i = 1 to k where k is the total number of optically anisotropic substance sheets, $n_{xi}$ and $n_{yi}$ are in-plane principal refractive indexes of an i-th optically anisotropic substance sheet, provided that $n_{xi} > n_{yi}$, and $n_{zi}$ is a principal refractive index in the thickness direction; and a multilayered optical body (A) consisting of the k optically anisotropic substance sheets and the liquid crystal cell satisfies the following formula:

$$0.90 < R_{40}/R_0 < 1.10$$

wherein $R_0$ is a retardation when light having a wavelength of 550 nm impinges vertically, and $R_{40}$ is a retardation when light having a wavelength of 550 nm impinges at an inclination angle of 40 degrees from the normal to the direction of the principal axis.

**2.** The liquid crystal display according to claim 1, wherein the light transmission axis of the light emission side polarizer and the slow axis of the multilayered optical body (A) are substantially parallel or substantially perpendicular to each other.

**3.** The liquid crystal display according to claim 1, wherein the light transmission axis of the light incident side polarizer and the slow axis of the multilayered optical body (A) are substantially parallel or substantially perpendicular to each other.

**4.** The liquid crystal display according to claim 1, wherein the slow axis of the optically anisotropic substance sheets and the slow axis of liquid crystal molecules within the liquid crystal cell in a voltage non-imposed state are substantially parallel or substantially perpendicular to each other.

**5.** The liquid crystal display according to claim 1, wherein at least one of the optically anisotropic substance sheets is a layer composed of a material with a minus intrinsic birefringence value.

**6.** The liquid crystal display according to claim 1, wherein at least one of the optically anisotropic substance sheets is a layer comprising discotic liquid crystal molecules or lyotropic liquid crystal molecules.

**7.** The liquid crystal display according to claim 1, wherein at least one of the optically anisotropic substance sheets is a layer comprising a photo-isomerizing substance.

**8.** The liquid crystal display according to claim 1, which has a protective film adhered on the light emission side polarizer, which film has a hard coat layer and a low refractive index layer, formed in this order on the light emission side of the protective film.

**9.** The liquid crystal display according to claim 8, wherein the low refractive index layer is comprised of aerogel and has a refractive index of not larger than 1.37.

**10.** The liquid crystal display according to claim 9, wherein the aerogel is a porous body comprising hollow articles dispersed in a matrix.

Fig. 1

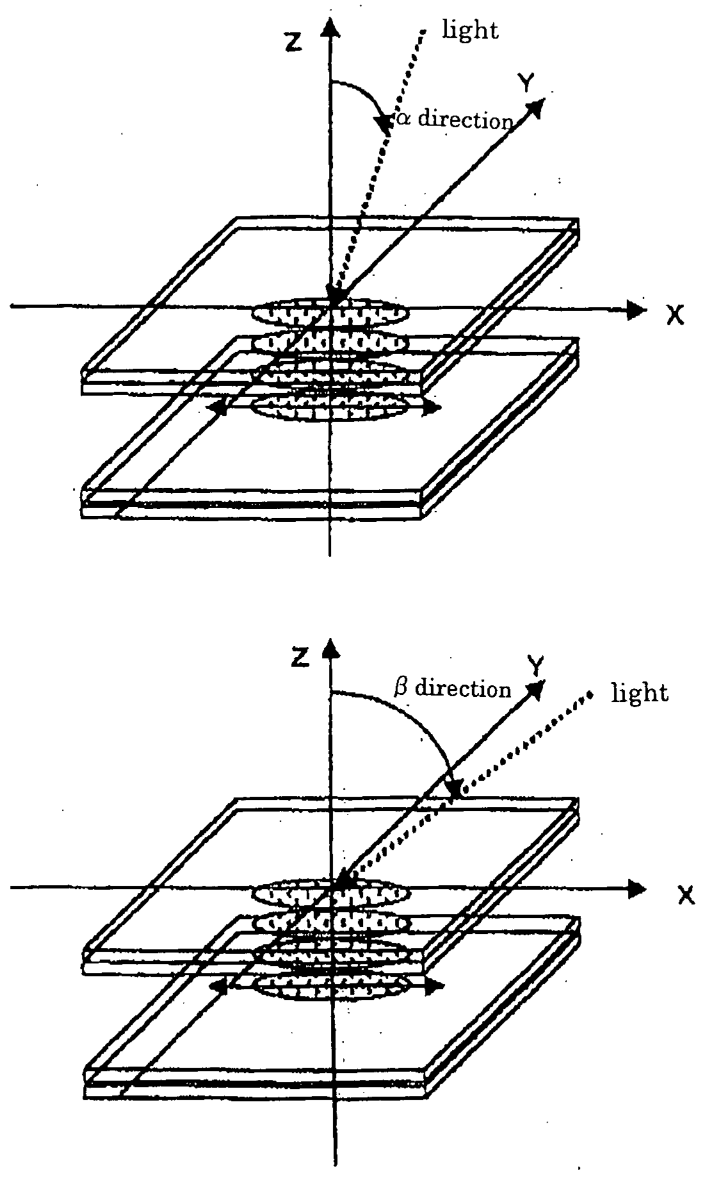

Fig. 2

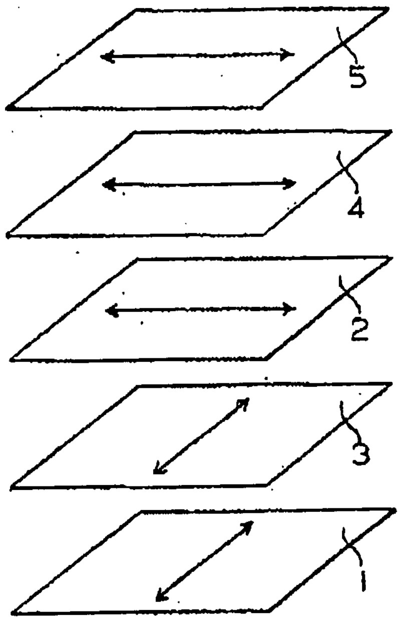


Fig. 3

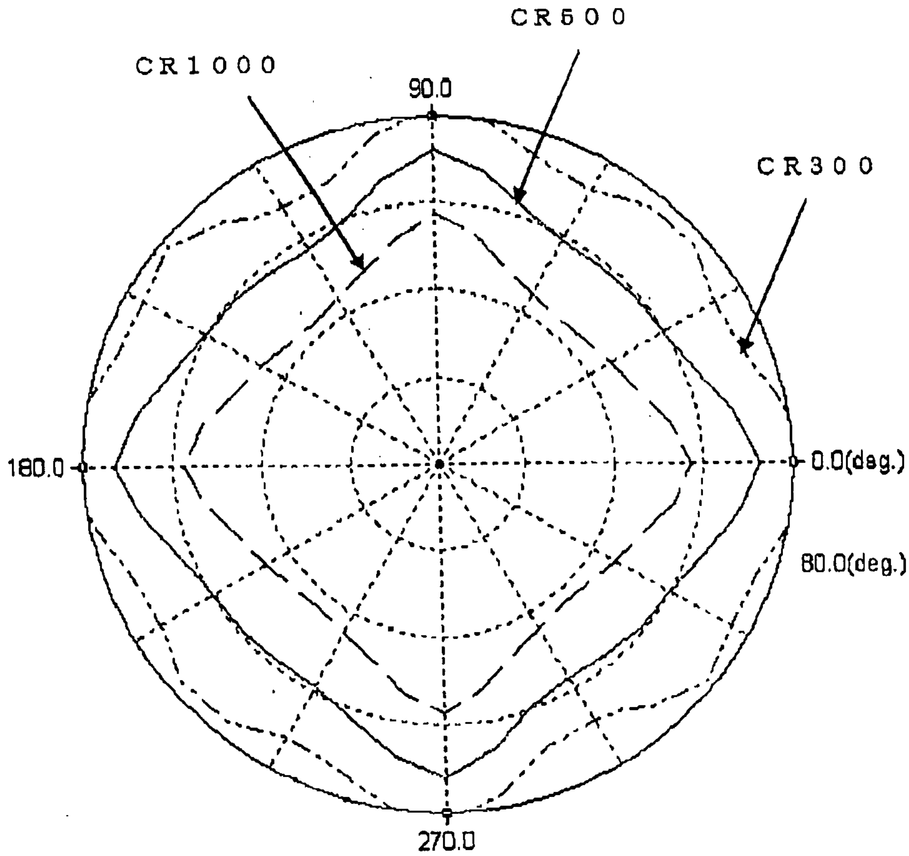

Fig. 4

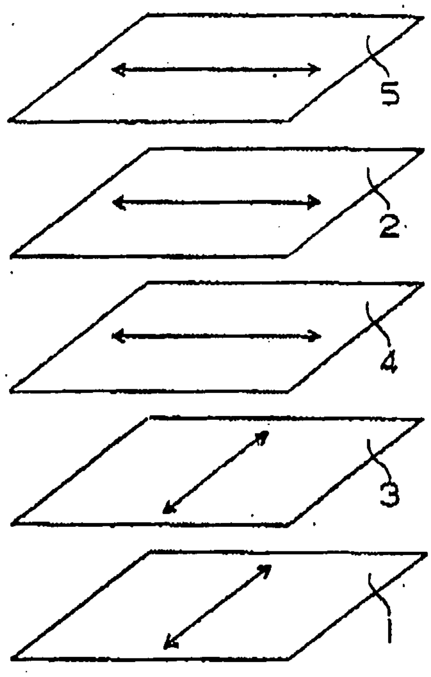


Fig. 5

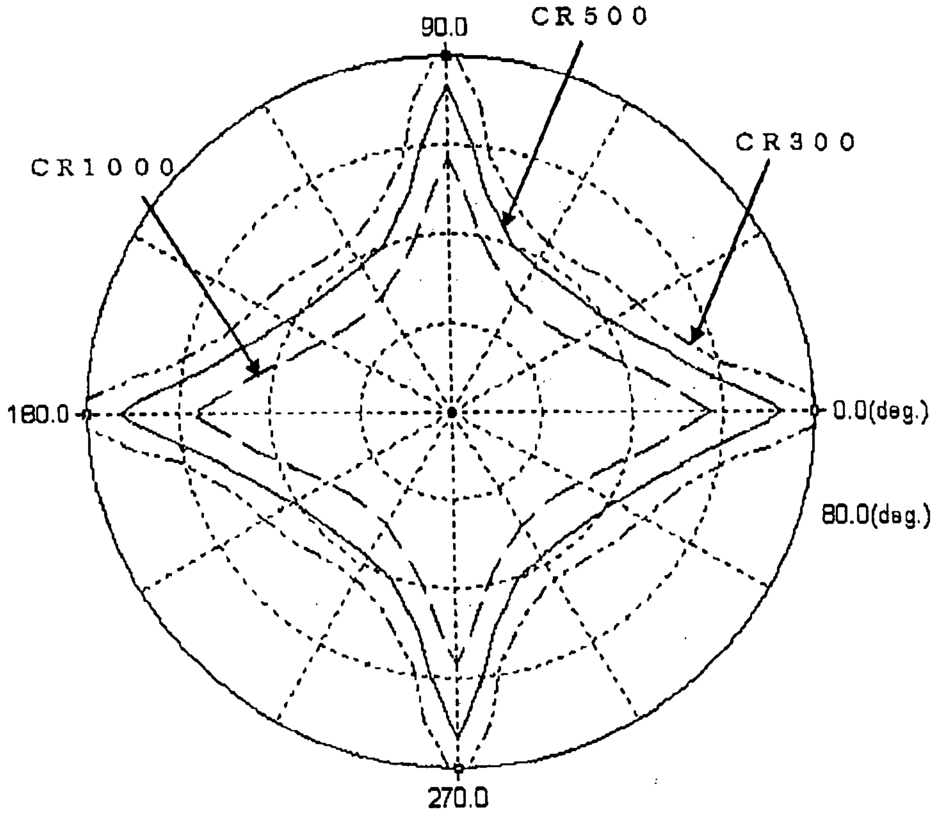

Fig. 6

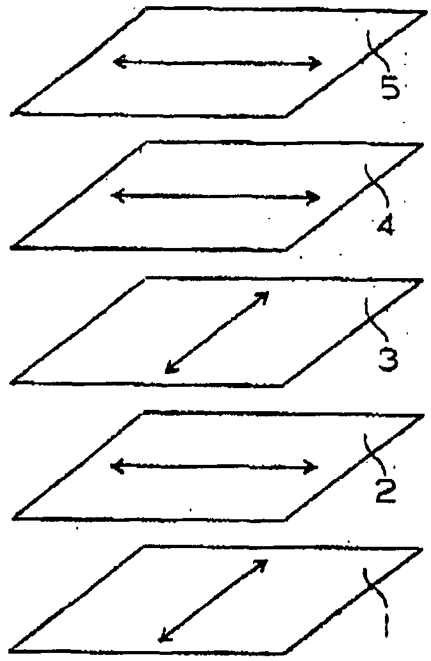


Fig. 7

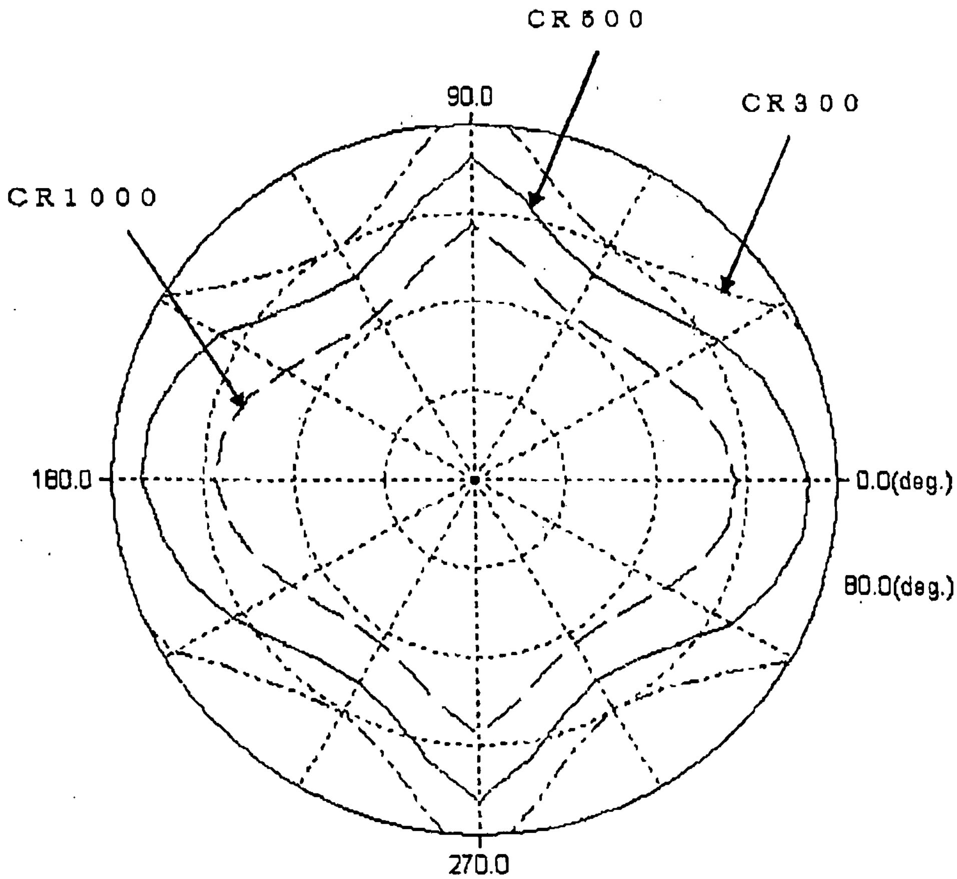

Fig. 8

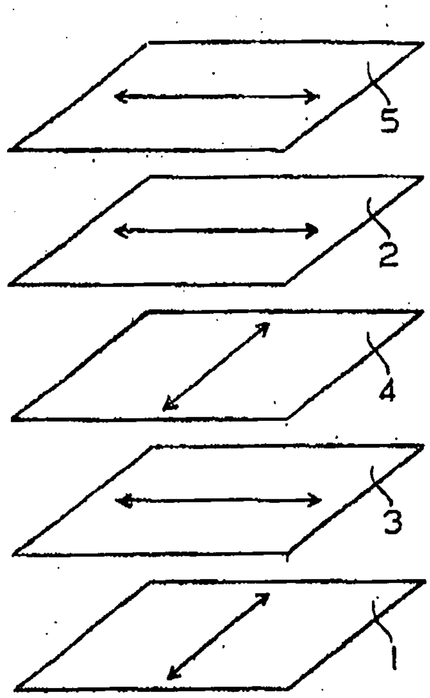


Fig. 9

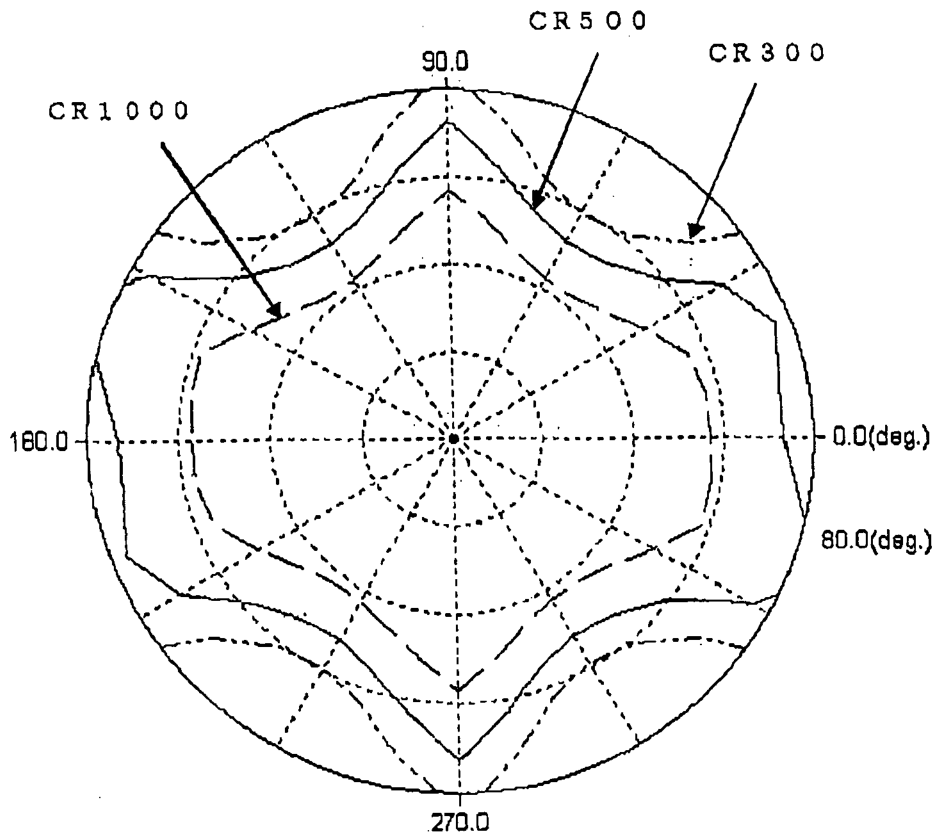

Fig. 10

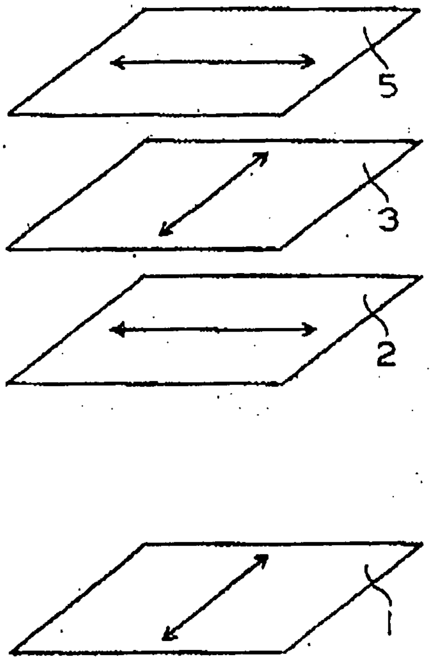


Fig. 11

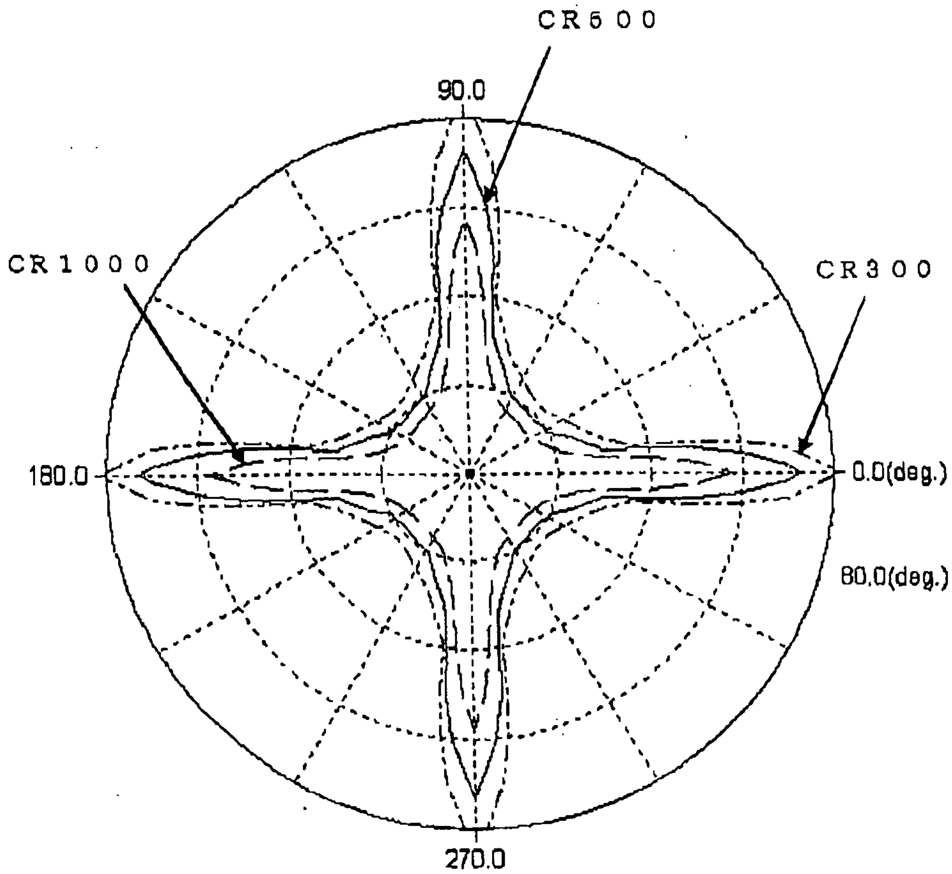

Fig. 12

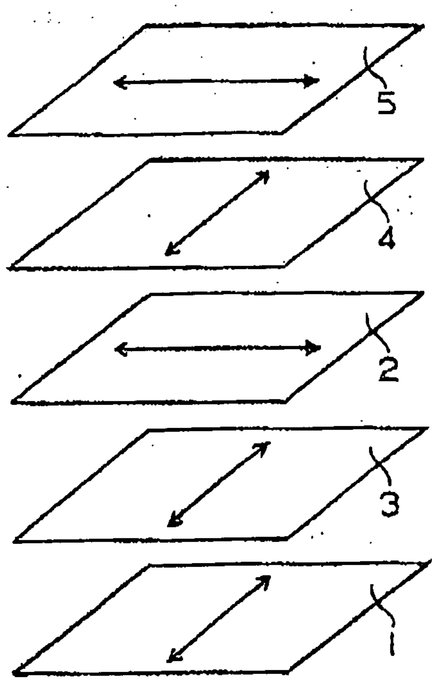

Fig. 13

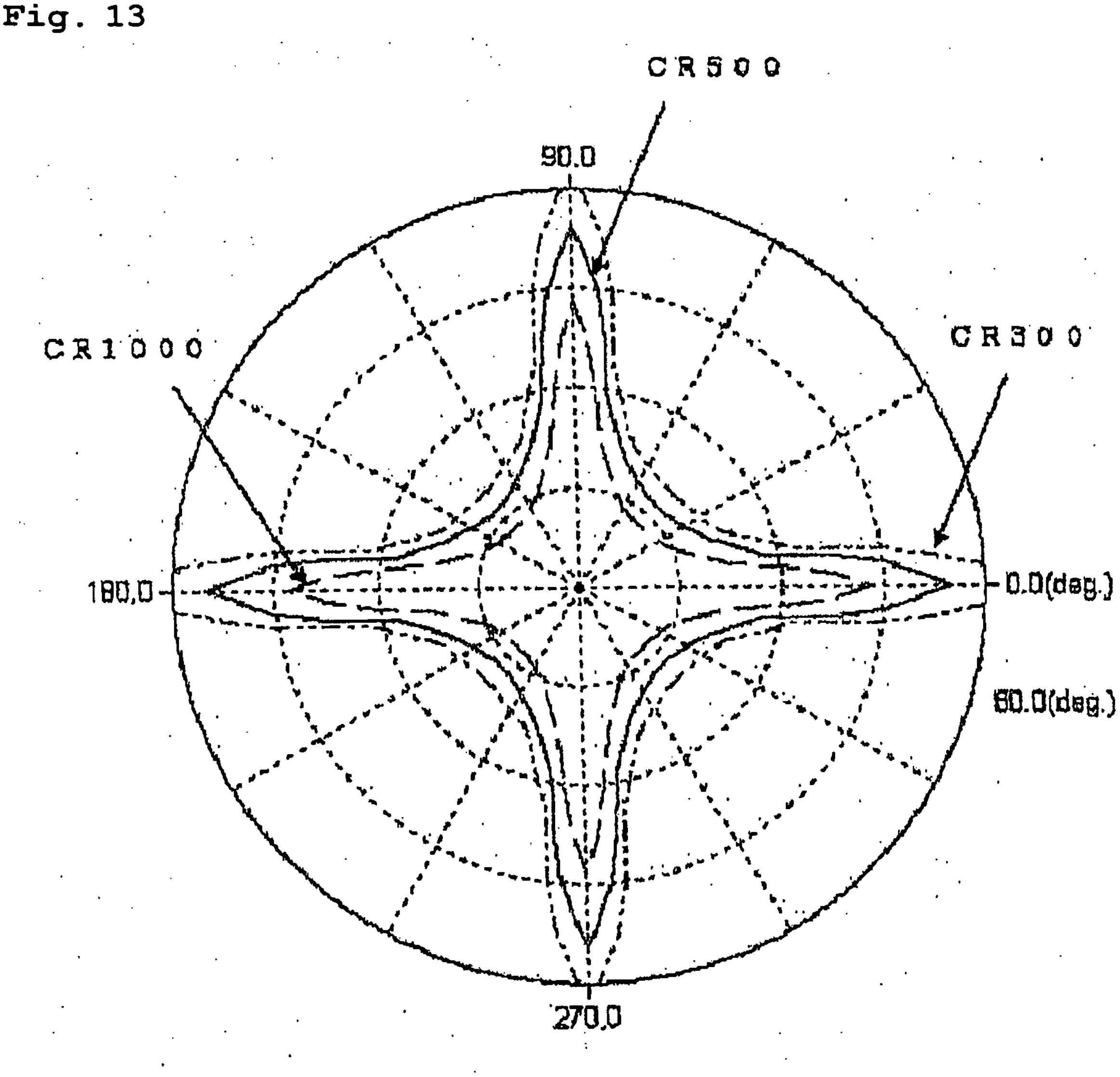
CR500
90.0
CR1000
CR300
180.0
0.0(deg.)
80.0(deg.)
270.0

Fig. 14

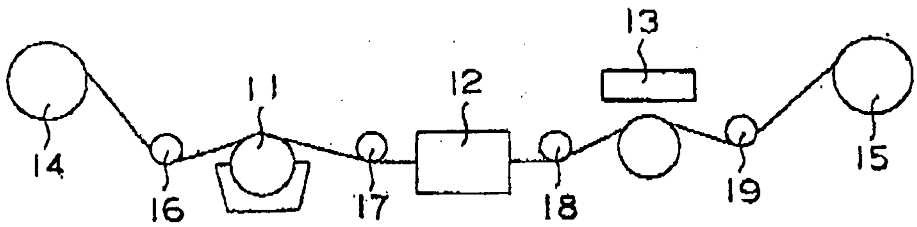
13
11
12
14
16
17
18
19
15

**INTERNATIONAL SEARCH REPORT**

International application No.
PCT/JP2005/017288

A. CLASSIFICATION OF SUBJECT MATTER
*G02F1/13363* (2006.01), *G02F1/1343* (2006.01), *G02B5/30* (2006.01)

According to International Patent Classification (IPC) or to both national classification and IPC

B. FIELDS SEARCHED

Minimum documentation searched (classification system followed by classification symbols)
*G02F1/13363* (2006.01), *G02F1/1343* (2006.01), *G02B5/30* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 11-133408 A (NEC Corp.),<br>21 May, 1999 (21.05.99),<br>Full text; all drawings<br>& US 6115095 A | 1-4<br>5-10 |
| Y | JP 10-54982 A (Fuji Photo Film Co., Ltd.),<br>24 February, 1998 (24.02.98),<br>Full text; all drawings<br>& US 6184957 B1 | 5-7 |
| Y | JP 2004-249495 A (Fuji Photo Film Co., Ltd.),<br>09 September, 2004 (09.09.04),<br>Full text; all drawings<br>& WO 03-93878 A | 8-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 October, 2005 (07.10.05) | 25 October, 2005 (25.10.05) |
| Name and mailing address of the ISA/<br>Japanese Patent Office<br>Facsimile No. | Authorized officer<br><br>Telephone No. |

Form PCT/ISA/210 (second sheet) (January 2004)

INTERNATIONAL SEARCH REPORT

International application No.
PCT/JP2005/017288

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-149642 A (Matsushita Electric Works, Ltd.), 21 May, 2003 (21.05.03), Full text; all drawings (Family: none) | 9-10 |
| Y | JP 2004-258267 A (Matsushita Electric Works, Ltd.), 16 September, 2004 (16.09.04), Full text; all drawings (Family: none) | 10 |
| A | JP 2001-242462 A (Sony Corp.), 07 September, 2001 (07.09.01), Full text; all drawings (Family: none) | 1-10 |
| A | JP 2002-55341 A (Sanyo Electric Co., Ltd.), 20 February, 2002 (20.02.02), Full text; all drawings (Family: none) | 1-10 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11305127 A
- US 6285430 B
- JP H1054982 A
- US 6184957 B


### Non-patent literature cited in the description


- **C. DESRADE et al.** *Mol. Crysr. Liq. Cryst.,* 1981, vol. 71, 111
- **B. KOHNE et al.** *Angew. Chem.,* 1984, vol. 96, 70
- **J. M. LEHN et al.** *J. Chem. Commun.,* 1985, 1794
- **J. ZHANG et al.** *J. Am. Chem. Soc.,* 1994, vol. 116, 2655